# EUROPÄISCHE PATENTSCHRIFT

(11) **EP 4 450 219 B1**
(45) Veröffentlichungstag und Bekanntmachung des Hinweises auf die Patenterteilung: **25.11.2026**
(21) Anmeldenummer: 23169320.1
(22) Anmeldetag: 21.04.2023
(51) Int. Cl.: B23Q 39/02, B23C 3/00, G05B 19/00, B23Q 39/00

(54) **BEARBEITUNGSZENTRUM ZUR SPANENDEN BEARBEITUNG EINES LÄNGLICHEN METALLISCHEN WERKSTÜCKS**
MACHINING CENTRE FOR MACHINING AN ELONGATED METALLIC WORKPIECE
CENTRE D'USINAGE POUR L'USINAGE PAR ENLÈVEMENT DE COPEAUX D'UNE PIÈCE MÉTALLIQUE ALLONGÉE

(43) Veröffentlichungstag der Anmeldung: 23.10.2024
(73) Patentinhaber: AFW Holding GmbH, 4656 Kirchham (AT)
(72) Erfinder: Weingärtner, Dominik, 4643 Pettenbach (AT)
(74) Vertreter: Hafner & Kohl PartmbB

(56) Entgegenhaltungen:
- DE-A1- 102010 052 303
- US-A1- 2007 199 187

## Beschreibung

Die Erfindung betrifft ein Bearbeitungszentrum zur spanenden Bearbeitung eines länglichen metallischen Werkstücks, insbesondere zur Herstellung eines Antriebselements, insbesondere für einen Bohrstrang, umfassend eine Lagerungseinrichtung zur Lagerung eines spanend zu bearbeitenden länglichen metallischen Werkstücks.

Bearbeitungszentren zur spanenden Bearbeitung eines länglichen metallischen Werkstücks, insbesondere zur Herstellung eines Antriebselements, insbesondere für einen Bohrstrang, sind aus dem Stand der Technik in verschiedenen Ausführungsformen dem Grunde nach bekannt und umfassen bis dato typischerweise eine in wenigstens einem Bewegungsfreiheitsgrad relativ zu einem mittels der Lagerungseinrichtung gelagerten Werkstück bewegbare Fräseinheit, vermittels welcher die spanende Bearbeitung des länglichen metallischen Werkstücks erfolgt.

Entsprechende Werkstücke können Längenabmessungen von mehr als 5 m aufweisen, was Herausforderungen an die Effizienz der spanenden Bearbeitung stellt.

Wenngleich bekannte Bearbeitungszentren eine zuverlässige spanende Bearbeitung entsprechender länglicher metallischer Werkstücke ermöglichen, sind diese regelmäßig im Hinblick auf ihre Effizienz bzw. Bearbeitungsgeschwindigkeit verbesserungs- bzw. weiterentwicklungsbedürftig.

Mithin besteht ein Bedarf nach einem Bearbeitungszentrum, welches eine zuverlässige spanende Bearbeitung eines länglichen metallischen Werkstücks mit verbesserter Effizienz bzw. Bearbeitungsgeschwindigkeit ermöglicht.

US 2007/0199187 A1 offenbart ein Bearbeitungszentrum zur Bearbeitung eines Werkstücks.

Der Erfindung liegt hiervon ausgehend die Aufgabe zugrunde, ein verbessertes Bearbeitungszentrum zur spanenden Bearbeitung eines länglichen metallischen Werkstücks, insbesondere zur Herstellung eines Antriebselements, insbesondere für einen Bohrstrang, anzugeben.

Die Aufgabe wird durch ein Bearbeitungszentrum zur spanenden Bearbeitung eines länglichen metallischen Werkstücks, insbesondere zur Herstellung eines Antriebselements, insbesondere für einen Bohrstrang, gemäß dem unabhängigen Anspruch 1 gelöst. Die Gegenstände der hierzu abhängigen Ansprüche betreffen mögliche Ausführungsformen des Bearbeitungszentrums gemäß dem unabhängigen Anspruch 1.

Ein erster Aspekt der Erfindung betrifft ein Bearbeitungszentrum zur spanenden Bearbeitung eines länglichen metallischen Werkstücks. Das Bearbeitungszentrum ist sonach im Allgemeinen zur spanenden Bearbeitung eines länglichen metallischen Werkstücks eingerichtet. Die vermittels des Bearbeitungszentrums ausführbare spanende Bearbeitung eines länglichen metallischen Werkstücks kann insbesondere der Herstellung eines z. B. als Rotor ausgeführten Antriebselements, insbesondere für einen Bohrstrang, dienen. Das Bearbeitungszentrum kann sonach insbesondere zur spanenden Bearbeitung eines länglichen metallischen Werkstücks zum Zwecke der Herstellung eines z. B. als Rotor ausgeführten Antriebselements, insbesondere für einen Bohrstrang, eingerichtet sein. Das Werkstück kann sonach eine zylindrische Geometrie bzw. Grundform aufweisen. Wenn im Weiteren von einem Werkstück die Rede ist, ist ein vermittels des Bearbeitungszentrums spanend bearbeitbares längliches metallisches Werkstück gemeint.

Das Bearbeitungszentrum umfasst eine Lagerungseinrichtung zur Lagerung eines Werkstücks. Die Lagerungseinrichtung kann insbesondere zur drehbaren Lagerung eines Werkstücks eingerichtet sein; die Lagerungseinrichtung kann sonach eingerichtet sein, ein Werkstück um seine Längsachse drehbar zu lagern, wozu die Lagerungseinrichtung einen oder mehrere Antriebe umfassen kann, über welche(n) ein gelagertes Werkstück in eine Drehbewegung um dessen Längsachse versetzbar ist. Die drehbare Lagerung eines Werkstücks ermöglicht eine vollständige spanende Bearbeitung des Außenumfangs des Werkstücks.

Die Lagerungseinrichtung kann durch eine oder mehrere Lagerungseinheiten gebildet sein bzw. eine oder mehrere Lagerungseinheiten umfassen. Typischerweise umfasst die Lagerungseinrichtung eine erste Lagerungseinheit, welche zur Lagerung eines ersten Abschnitts, insbesondere eines ersten freien Endes, eines Werkstücks eingerichtet ist, und eine zweite Lagerungseinheit, welche zur Lagerung eines zweiten Abschnitts, insbesondere eines zweiten freien Endes, des Werkstücks eingerichtet ist. Jeweilige Lagerungseinheiten können z. B. als Klemm- und/oder Spanneinheiten ausgebildet sein oder solche umfassen, welche für eine klemmende oder spannende Lagerung eines Werkstücks, d. h. insbesondere jeweiliger erster und zweiter Abschnitte eines Werkstücks, eingerichtet sind. Konkrete Ausführungsbeispiele entsprechender Lagerungseinheiten sind in nicht abschließender Aufzählung Spannfutter, Reitstöcke, etc.

Jeweilige Lagerungseinheiten können unabhängig ihrer konkreten Ausführungsform in einem, z. B. translatorischen, Bewegungsfreiheitsgrad, insbesondere entlang einer Bearbeitungs- bzw. Maschinenachse des Bearbeitungszentrums, relativ zueinander bewegbar gelagert sein. Die Lagerungseinrichtung kann sonach eingerichtet sein, unterschiedlich lange Werkstücke zu lagern, als wenigstens eine Lagerungseinheit relativ zu einer anderen Lagerungseinheit bewegbar gelagert sein kann. Die Lagerungseinrichtung kann hierfür einen oder mehrere Antriebe umfassen, über welche(n) wenigstens eine Lagerungseinheit in eine Bewegung, insbesondere entlang der Bearbeitungs- bzw. Maschinenachse des Bearbeitungszentrums, relativ zu einer anderen Lagerungseinheit versetzbar ist. Konkret können jeweilige Lagerungseinheiten z. B. bewegbar an oder in einem Maschinenbett des Bearbeitungszentrums angeordnet oder ausgebildet sein.

An dieser Stelle sei allgemein angemerkt, dass die Lagerungseinrichtung grundsätzlich eingerichtet sein kann, Werkstücke mit einer Länge von mehr als 5 m, insbesondere mehr als 7,5 m, weiter insbesondere mehr als 10 m, zu lagern. Entsprechend kann das Bearbeitungszentrum eingerichtet sein, Werkstücke mit einer Länge von mehr als 5 m, insbesondere mehr als 7,5 m, weiter insbesondere mehr als 10 m, spanend zu bearbeiten.

Das Bearbeitungszentrum umfasst weiterhin eine in wenigstens einem Bewegungsfreiheitsgrad, hierbei kann es sich grundsätzlich um einen translatorischen und/oder um einen rotatorischen Bewegungsfreiheitsgrad handeln, relativ zu einem mittels der Lagerungseinrichtung gelagerten Werkstück bewegbare erste Fräseinheit. Die erste Fräseinheit umfasst typischerweise eine Gehäusestruktur, ein an oder in der Gehäusestruktur angeordnetes, um eine Werkzeugachse drehbares Fräswerkzeug sowie einen an oder in der Gehäusestruktur angeordneten, dem Fräswerkzeug zugeordneten (motorischen) Antrieb, welcher eingerichtet ist, eine das Fräswerkzeug in eine Drehbewegung versetzende Antriebskraft zu erzeugen und auf das Fräswerkzeug zu übertragen. Konkret kann die erste Fräseinheit sonach z. B. als Fräskopf ausgebildet sein, welcher eine entsprechende Gehäusestruktur und wenigstens ein an oder in der Gehäusestruktur angeordnetes Fräswerkzeug umfasst.

Die Gehäusestruktur der ersten Fräseinheit ist mittelbar oder unmittelbar an einer, z. B. schlittenartig ausgeführten, Tragstruktur angeordnet, welche translatorisch entlang der Bearbeitungs- bzw. Maschinenachse des Bearbeitungszentrums bewegbar sein kann. Die Tragstruktur ist eingerichtet, die erste Fräseinheit bzw. einen entsprechenden Fräskopf in wenigstens einem Schwenkbewegungsfreiheitsgrad um eine z. B. parallel oder rechtwinklig zu der Bearbeitungs- bzw. Maschinenachse des Bearbeitungszentrums ausgerichtete Schwenkachse schwenkbeweglich zu lagern und kann hierfür einen oder mehrere Antriebe umfassen. Die Tragstruktur umfasst zudem ein oder mehrere Stützelemente, welche eingerichtet sind, das Werkstück zu stützen. Wenigstens ein Stützelement kann hierfür über einen oder mehrere Antriebe, z. B. radial bezüglich der Längsachse des Werkstücks, gegen das Werkstück bewegt werden, um das Werkstück im Bereich der Tragstruktur und damit im Bereich der Bearbeitung durch die erste Fräseinheit zu stützen. Ebenso ist es denkbar, dass wenigstens ein entsprechendes Stützelement an der Gehäusestruktur der ersten Fräseinheit angeordnet oder ausgebildet ist und entweder die Gehäusestruktur mitsamt dem wenigstens einen Stützelement oder nur das wenigstens eine Stützelement relativ zu der Gehäusestruktur bewegbar gelagert ist, um gegen das Werkstück bewegt werden zu können, um das Werkstück im Bereich der Tragstruktur und damit im Bereich der Bearbeitung durch die erste Fräseinheit zu stützen.

Um die erste Fräseinheit in eine Bewegung relativ zu einem mittels der Lagerungseinrichtung gelagerten Werkstück zu versetzen, umfasst das Bearbeitungszentrum wenigstens einen der ersten Fräseinheit zugeordneten (motorischen) Antrieb, welcher eingerichtet ist, eine die erste Fräseinheit in eine Bewegung relativ zu einem mittels der Lagerungseinrichtung gelagerten Werkstück versetzende Antriebskraft zu erzeugen und auf die erste Fräseinheit zu übertragen. Bei der Bewegung der ersten Fräseinheit handelt es sich insbesondere um eine Translationsbewegung entlang einer Translationsachse, die mit der Bearbeitungs- oder Maschinenachse des Bearbeitungszentrums zusammenfallen oder parallel zu dieser angeordnet sein kann. Zudem ist eine translatorische Bewegung der ersten Fräseinheit gegen das bzw. ein Werkstück möglich.

Die erste Fräseinheit kann zusätzlich zu dem translatorischen Bewegungsfreiheitsgrad relativ zu einem mittels der Lagerungseinrichtung gelagerten Werkstück entlang der Translationsachse auch in wenigstens einem weiteren Bewegungsfreiheitsgrad relativ zu einem mittels der Lagerungseinrichtung gelagerten Werkstück bewegbar gelagert sein. Ein weiterer Bewegungsfreiheitsgrad der ersten Fräseinheit kann z. B. ein Schwenkbewegungsfreiheitsgrad um eine zu der Bearbeitungs- oder Maschinenachse des Bearbeitungszentrums parallele und/oder senkrechte Schwenkachse sein. Mithin kann die erste Fräseinheit in wenigstens einem Translationsbewegungsfreiheitsgrad und in wenigstens einem Rotations- bzw. Schwenkbewegungsfreiheitsgrad relativ zu einem mittels der Lagerungseinrichtung gelagerten Werkstück bewegbar sein. Derart können vermittels der ersten Fräseinheit komplexe Fräsaufgaben realisiert werden, mithin komplexe Geometrien in das Werkstück eingebracht werden.

Das Bearbeitungszentrum umfasst weiterhin eine in wenigstens einem Bewegungsfreiheitsgrad, hierbei kann es sich grundsätzlich um einen translatorischen und/oder um einen rotatorischen Bewegungsfreiheitsgrad handeln, relativ zu einem bzw. dem mittels der Lagerungseinrichtung gelagerten Werkstück bewegbare zweite Fräseinheit. Die zweite Fräseinheit umfasst typischerweise eine Gehäusestruktur, ein an oder in der Gehäusestruktur angeordnetes, um eine Werkzeugachse drehbares Fräswerkzeug sowie einen an oder in der Gehäusestruktur angeordneten, dem Fräswerkzeug zugeordneten (motorischen) Antrieb, welcher eingerichtet ist, eine das Fräswerkzeug in eine Drehbewegung versetzende Antriebskraft zu erzeugen und auf das Fräswerkzeug zu übertragen. Konkret kann auch die zweite Fräseinheit z. B. als Fräskopf ausgebildet sein, welcher eine entsprechende Gehäusestruktur und wenigstens ein an oder in der Gehäusestruktur angeordnetes Fräswerkzeug umfasst.

Auch eine entsprechende Gehäusestruktur der zweiten Fräseinheit ist mittelbar oder unmittelbar an einer, z. B. schlittenartig ausgeführten, Tragstruktur angeordnet, welche translatorisch entlang der Bearbeitungs- bzw. Maschinenachse des Bearbeitungszentrums bewegbar sein kann. Die Tragstruktur ist eingerichtet, die zweite Fräseinheit bzw. einen entsprechenden Fräskopf in wenigstens einem Schwenkbewegungsfreiheitsgrad um eine z. B. parallel oder rechtwinklig zu der Bearbeitungs- bzw. Maschinenachse des Bearbeitungszentrums ausgerichtete Schwenkachse schwenkbeweglich zu lagern und kann hierfür einen oder mehrere Antriebe umfassen. Die Tragstruktur umfasst zudem ein oder mehrere Stützelemente, welche eingerichtet sind, ein Werkstück zu stützen. Wenigstens ein Stützelement kann hierfür über einen oder mehrere Antriebe, z. B. radial bezüglich der Längsachse des Werkstücks, gegen das Werkstück bewegt werden, um das Werkstück im Bereich der Tragstruktur und damit im Bereich der Bearbeitung durch die zweite Fräseinheit zu stützen. Ebenso ist es denkbar, dass wenigstens ein entsprechendes Stützelement an der Gehäusestruktur der zweiten Fräseinheit angeordnet oder ausgebildet ist und entweder die Gehäusestruktur mitsamt dem wenigstens einen Stützelement oder nur das wenigstens eine Stützelement relativ zu der Gehäusestruktur bewegbar gelagert ist, um gegen das Werkstück bewegt werden zu können, um das Werkstück im Bereich der Tragstruktur und damit im Bereich der Bearbeitung durch die erste Fräseinheit zu stützen.

Um die zweite Fräseinheit in eine Bewegung relativ zu einem bzw. dem mittels der Lagerungseinrichtung gelagerten Werkstück zu versetzen, umfasst das Bearbeitungszentrum wenigstens einen der zweiten Fräseinheit zugeordneten (motorischen) Antrieb, welcher eingerichtet ist, eine die zweite Fräseinheit in eine Bewegung relativ zu einem mittels der Lagerungseinrichtung gelagerten Werkstück versetzende Antriebskraft zu erzeugen und auf die zweite Fräseinheit zu übertragen. Bei der Bewegung der zweiten Fräseinheit handelt es sich insbesondere um eine Translationsbewegung entlang einer Translationsachse, die mit der Bearbeitungs- oder Maschinenachse des Bearbeitungszentrums zusammenfallen oder parallel zu dieser angeordnet sein kann. Zudem ist eine translatorische Bewegung der zweiten Fräseinheit gegen das bzw. ein Werkstück möglich.

Die zweite Fräseinheit kann zusätzlich zu dem translatorischen Bewegungsfreiheitsgrad relativ zu einem mittels der Lagerungseinrichtung gelagerten Werkstück entlang der Translationsachse auch in wenigstens einem weiteren Bewegungsfreiheitsgrad relativ zu einem mittels der Lagerungseinrichtung gelagerten Werkstück bewegbar gelagert sein. Ein weiterer Bewegungsfreiheitsgrad der zweiten Fräseinheit kann z. B. ein Schwenkbewegungsfreiheitsgrad um eine zu der Bearbeitungs- oder Maschinenachse des Bearbeitungszentrums parallele und/oder senkrechte Schwenkachse sein. Mithin kann die zweite Fräseinheit in wenigstens einem Translationsbewegungsfreiheitsgrad und in wenigstens einem Rotations- bzw. Schwenkbewegungsfreiheitsgrad relativ zu einem mittels der Lagerungseinrichtung gelagerten Werkstück bewegbar sein. Derart können vermittels der zweiten Fräseinheit komplexe Fräsaufgaben realisiert werden, mithin komplexe Geometrien in das Werkstück eingebracht werden.

Typischerweise ist jede Fräseinheit sowohl in einem Translationsbewegungsfreiheitsgrad translatorisch entlang der Bearbeitungs- oder Maschinenachse des Bearbeitungszentrums als auch in einem oder mehreren Schwenkbewegungsfreiheitsgraden um eine zu der Bearbeitungs- oder Maschinenachse des Bearbeitungszentrums parallele und/oder senkrechte Schwenkachse bewegbar gelagert. Die translatorischen Bewegungen und/oder die Schwenkbewegungen der Fräseinheiten sind dabei typischerweise auf eine Drehbewegung des Werkstücks um dessen Längsachse abgestimmt bzw. zu dieser synchronisiert.

Das Bearbeitungszentrum umfasst weiterhin eine hardware- und/oder softwaremäßig implementierte Steuereinrichtung, welche zur Steuerung von Bewegungen der ersten Fräseinheit in dem wenigstens einen Bewegungsfreiheitsgrad in einen oder innerhalb eines der ersten Fräseinheit zugeordneten ersten Bearbeitungsbereichs eines bzw. des mittels der Lagerungseinrichtung gelagerten Werkstücks und zur Steuerung von Bewegungen der zweiten Fräseinheit in dem wenigstens einen Bewegungsfreiheitsgrad in einen oder innerhalb eines der zweiten Fräseinheit zugeordneten zweiten Bearbeitungsbereichs des mittels der Lagerungseinrichtung gelagerten Werkstücks, eingerichtet ist. Ein jeweiliger Bearbeitungsbereich umfasst typischerweise wenigstens eine durch einen Anfangs- und einen Endpunkt bestimmte Bearbeitungsstrecke, innerhalb welcher sich die jeweilige Fräseinheit im Rahmen der Bearbeitung des jeweiligen Bearbeitungsbereichs bewegt oder bewegen kann. Ein jeweiliger Bearbeitungsbereich entspricht typischerweise einem Bereich bzw. Teilbereich eines Werkstücks, welcher mittels des Bearbeitungszentrums zu bearbeiten ist; jeweilige Bearbeitungsbereiche bilden sonach typischerweise gemeinsam den insgesamt mittels des Bearbeitungszentrums zu bearbeitenden Bereich eines jeweiligen Werkstücks ab.

Jeder Fräseinheit ist bzw. wird typischerweise wenigstens ein Bearbeitungsbereich zugeordnet, welchen die jeweilige Fräseinheit spanend zu bearbeiten hat; das Werkstück kann durch das Vorsehen der wenigstens zwei Fräseinheiten sonach, insbesondere zeitgleich, in verschiedenen Bereichen - diese entsprechen den Bearbeitungsbereichen der jeweiligen Fräseinheiten - spanend bearbeitet werden, was die Effizienz der mit dem Bearbeitungszentrum möglichen spanenden Bearbeitung im Vergleich zu Bearbeitungszentren mit nur einer Fräseinheit deutlich erhöht.

Die Steuereinrichtung ist typischerweise auch eingerichtet, jeweilige Bearbeitungsbereiche zu definieren bzw. zu erzeugen und den Fräseinheiten zuzuordnen. Die Steuereinrichtung kann sonach eingerichtet sein, eine Bearbeitungsaufgabe eines Werkstücks durch entsprechende Erzeugung bzw. Definition und Zuordnung von Bearbeitungsbereichen im Sinne einer Bearbeitungsjob-Planung festzulegen und, wie sich im Weiteren ergibt, gegebenenfalls sogar im Betrieb des Bearbeitungszentrums anzupassen. Konkret kann die Steuereinrichtung z. B. eingerichtet sein, der ersten Fräseinheit den ersten Bearbeitungsbereich des Werkstücks zuzuordnen und der zweiten Fräseinheit den zweiten Bearbeitungsbereich des Werkstücks zuzuordnen.

Hierbei kann die Steuereinrichtung einen oder mehrere Eingangsparameter berücksichtigen; mithin kann die Steuereinrichtung eingerichtet sein, jeweilige Bearbeitungsbereiche auf Grundlage wenigstens eines Eingangsparameters zu erzeugen und den Fräseinheiten zuzuordnen. Entsprechende Eingangsparameter können beispielsweise und damit nicht abschließend sein: geometrisch-konstruktive Parameter, wie z. B. Abmessungen, Geometrie, etc., des zu bearbeitenden Werkstücks, geometrisch-konstruktive Parameter, wie z. B. Abmessungen, Geometrie, etc., des bearbeiteten Werkstücks, Materialparameter des Werkstücks, wie z. B. Härte, Spanbarkeit, etc., Parameter der Fräseinheiten, wie z. B. Leistungsaufnahme, oder Parameter der Fräswerkzeuge, wie z. B. Art der Fräswerkzeuge, Geometrie der Fräswerkzeuge, Härte der Fräswerkzeuge, etc.

Die vermittels der Steuereinrichtung mögliche Steuerung von Bewegungen der ersten Fräseinheit in den oder innerhalb des der ersten Fräseinheit zugeordneten ersten Bearbeitungsbereichs des Werkstücks und die Steuerung von Bewegungen der zweiten Fräseinheit in den oder innerhalb des der zweiten Fräseinheit zugeordneten zweiten Bearbeitungsbereichs des Werkstücks kann zudem die Steuerung ein oder mehrerer Betriebsparameter, wie z. B. der Leistungsaufnahme, der jeweilig Fräseinheiten zur Bearbeitung des Werkstücks in dem jeweiligen Bearbeitungsbereich des Werkstücks beinhalten.

Der Steuereinrichtung kann eine hardware- und/oder softwaremäßig implementierte Benutzerschnittstelle zugeordnet sein, über welche ein Benutzer steuerungstechnische Eingaben tätigen kann; insbesondere kann es über die Benutzerschnittstelle möglich sein, Eingaben hinsichtlich der Planung und/oder Anpassung von Bearbeitungsjobs zu tätigen, auf Grundlage welcher die Steuereinrichtung eine Bearbeitungsaufgabe eines Werkstücks durch entsprechende Erzeugung bzw. Definition und Zuordnung von Bearbeitungsbereichen im Sinne einer Bearbeitungsjob-Planung festlegt und gegebenenfalls sogar im Betrieb des Bearbeitungszentrums anpasst.

Insgesamt liegt damit ein verbessertes Bearbeitungszentrum zur spanenden Bearbeitung eines Werkstücks vor.

Die Steuereinrichtung kann eingerichtet sein, Bewegungen der ersten Fräseinheit in dem wenigstens einen Bewegungsfreiheitsgrad abhängig oder unabhängig von Bewegungen der zweiten Fräseinheit in dem wenigstens einen Bewegungsfreiheitsgrad zu steuern, oder umgekehrt. Mithin können Steuerungen von Bewegungen der ersten Fräseinheit in dem wenigstens einen Bewegungsfreiheitsgrad abhängig von und damit unter Berücksichtigung von Bewegungen der zweiten Fräseinheit in dem wenigstens einen Bewegungsfreiheitsgrad erfolgen (oder umgekehrt); derart kann z. B. sichergestellt werden, dass die Fräseinheiten in einem gewünschten Maß voneinander beabstandet arbeiten, um Situationen zu vermeiden, in welchen sich die spanende Bearbeitung eines Werkstücks vermittels der ersten Fräseinheit in dem ersten Bearbeitungsbereich möglicherweise negativ auf die spanende Bearbeitung des Werkstücks in dem zweiten Bearbeitungsbereich auswirkt (oder umgekehrt). Steuerungstechnisch einfacher zu realisieren kann eine Variante sein, in welcher Bewegungen der ersten Fräseinheit in dem wenigstens einen Bewegungsfreiheitsgrad unabhängig von Bewegungen der zweiten Fräseinheit in dem wenigstens einen Bewegungsfreiheitsgrad gesteuert werden, mithin jeweilige Fräseinheiten innerhalb deren jeweiliger Bearbeitungsbereiche unabhängig voneinander arbeiten.

Wie erwähnt, kann die Steuereinrichtung eingerichtet sein, der ersten Fräseinheit den ersten Bearbeitungsbereich des Werkstücks zuzuordnen und der zweiten Fräseinheit den zweiten Bearbeitungsbereich des Werkstücks zuzuordnen. Dies kann auch beinhalten, dass die Steuereinrichtung eingerichtet ist, die Bearbeitung, d. h. insbesondere die komplette Bearbeitung, des der ersten Fräseinheit zugeordneten ersten Bearbeitungsbereichs des Werkstücks mittels der ersten Fräseinheit und die Bearbeitung, d. h. insbesondere die komplette Bearbeitung, des der zweiten Fräseinheit zugeordneten zweiten Bearbeitungsbereichs des Werkstücks mittels der zweiten Fräseinheit zu steuern.

Wie ebenso erwähnt, umfasst ein jeweiliger Bearbeitungsbereich typischerweise wenigstens eine durch einen Anfangs- und einen Endpunkt bestimmte Bearbeitungsstrecke. Ein jeweiliger Anfangs- oder Endpunkt kann z. B. an oder in einem Randbereich bezüglich der Längsachse des Werkstücks oder innerhalb des Werkstücks liegen. Mithin kann die Bearbeitung eines Werkstücks z. B. mit der ersten Fräseinheit ausgehend von einem ersten Randbereich des Werkstücks, wie z. B. einem ersten freien Ende des Werkstücks, erfolgen; die erste Fräseinheit kann im Rahmen der Bearbeitung des Werkstücks sonach z. B. ausgehend von dem den Anfangspunkt des ersten Bearbeitungsbereichs aufweisenden Randbereich in Richtung des Endpunkts bewegt werden. Der Endpunkt des ersten Bearbeitungsbereichs kann sonach in Richtung des zweiten freien Endes des Werkstücks versetzt liegen ("Bearbeitung von außen nach innen"). Auch eine umgekehrte Vorgehensweise ("Bearbeitung von innen nach außen") ist jedoch möglich. In analoger Weise kann die Bearbeitung des Werkstücks mit der zweiten Fräseinheit ausgehend von einem zweiten Randbereich des Werkstücks, wie z. B. einem zweiten freien Ende des Werkstücks, erfolgen; die zweite Fräseinheit kann im Rahmen der Bearbeitung des Werkstücks sonach z. B. ausgehend von dem den Anfangspunkt des zweiten Bearbeitungsbereichs aufweisenden Randbereich in Richtung des Endpunkts bewegt werden. Der Endpunkt des zweiten Bearbeitungsbereichs kann sonach in Richtung des ersten freien Endes des Werkstücks versetzt liegen ("Bearbeitung von außen nach innen"). Auch hier ist eine umgekehrte Vorgehensweise ("Bearbeitung von innen nach außen") möglich.

Alternativ oder ergänzend kann ein Anfangs- oder Endpunkt wenigstens eines Bearbeitungsbereichs beabstandet zu einem Randbereich bezüglich der Längsachse des Werkstücks oder innerhalb des Werkstücks liegen. Mithin sind auch Varianten denkbar, in welchen eine Fräseinheit (nur) die Randbereiche eines Werkstücks bearbeitet, z. B. um in diesen bestimmte Schnittstellen auszubilden, und eine andere Fräseinheit die übrigen (inneren) Bereiche des Werkstücks bearbeitet, z. B. um in diesen eine für die bestimmungsgemäße Funktion des bearbeiteten Werkstücks erforderliche Funktionsgeometrie auszubilden.

Ebenso sind Varianten denkbar, bei welchen wenigstens einer Fräseinheit mehrere gesonderte Bearbeitungsbereiche zugeordnet sind. Die Steuereinrichtung kann sonach eingerichtet sein, wenigstens einer Fräseinheit mehrere gesonderte Bearbeitungsbereiche zuzuordnen.

Grundsätzlich gilt, dass der erste und der zweite Bearbeitungsbereich einander zumindest abschnittsweise (axial bezüglich der Längsachse des Werkstücks) überlappen können oder einander nicht überlappen können. In der ersten Variante kann der Anfangs- und/oder Endpunkt des ersten Bearbeitungsbereichs sonach innerhalb des zweiten Bearbeitungsbereichs liegen (oder umgekehrt), woraus sich ein überlappender Bereich ergibt, in welchem eine Bearbeitung des Werkstücks durch beide Fräseinheiten möglich ist. Dies kann z. B. sinnvoll sein, wenn ein (unbearbeitetes) Werkstück initial bearbeitet wird; mithin kann eine initiale Bearbeitung des Werkstücks in einem als Initialbereich bezeichenbaren Bereich nur durch eine Fräseinheit erfolgen, woraufhin die andere Fräseinheit ihre Bearbeitung des Werkstücks an bzw. in dem zuvor initial bearbeiteten Bereich (Initialbereich) beginnt. Die den jeweiligen Fräseinheiten zugeordneten Bearbeitungsbereiche können sich sonach zumindest in einem einen entsprechenden initialen Bereich umfassenden Bereich des Werkstücks überlappen. In der zweiten Variante liegt der Anfangs- und/oder Endpunkt des ersten Bearbeitungsbereichs außerhalb des zweiten Bearbeitungsbereichs (oder umgekehrt), sodass keine oder weniger steuerungstechnische, d. h. insbesondere sicherheitsrelevante, Maßnahmen vorgehalten werden müssen, um z. B. eine unerwünschte Annäherung oder Kollision der Fräseinheiten zu vermeiden.

Es wurde bereits angedeutet, dass die Steuereinrichtung eingerichtet sein kann, den ersten und/oder zweiten Bearbeitungsbereich anzupassen bzw. zu verändern. Mithin kann der einer jeweiligen Fräseinheit (ursprünglich) zugeordnete Bearbeitungsbereich verändert, d. h. insbesondere vergrößert oder verkleinert, werden; der wenigstens einer Fräseinheit (ursprünglich) zugeordnete Bearbeitungsbereich kann durch die Steuereinrichtung sonach vergrößert oder verkleinert werden. Die Steuereinrichtung kann sonach eingerichtet sein, die Zuordnung der ersten Fräseinheit zu dem ersten Bearbeitungsbereich zu ändern, sodass die erste Fräseinheit zumindest abschnittsweise auch dem zweiten Bearbeitungsbereich zuordenbar oder zugeordnet ist. Alternativ oder ergänzend kann die Steuereinrichtung eingerichtet sein, die Zuordnung der zweiten Fräseinheit zu dem zweiten Bearbeitungsbereich zu ändern, sodass die zweite Fräseinheit zumindest abschnittsweise auch dem ersten Bearbeitungsbereich zuordenbar oder zugeordnet ist.

Die Anpassung bzw. Veränderung eines jeweiligen Bearbeitungsbereichs kann insbesondere dynamisch erfolgen. Die Anpassung bzw. Veränderung eines jeweiligen Bearbeitungsbereichs kann insbesondere während der spanenden Bearbeitung eines Werkstücks, mithin während des Betriebs der Fräseinheiten erfolgen.

Die Anpassung bzw. Veränderung eines jeweiligen Bearbeitungsbereichs eröffnet ein hohes Maß an Flexibilität im Zusammenhang mit der Bearbeitung eines Werkstücks, etwa weil eine Möglichkeit geschaffen ist, dass eine Fräseinheit (auch) in wenigstens einem dieser ursprünglich nicht zugeordneten Bereich des Werkstücks arbeiten kann. Derart können z. B. Bearbeitungsverzögerungen der anderen Fräseinheit Rechnung getragen werden. Die Möglichkeit der Anpassung des ersten und/oder zweiten Bearbeitungsbereichs kann sich sonach auch positiv auf die Effizienz des Bearbeitungszentrums auswirken.

Das Bearbeitungszentrum kann eine Überwachungseinrichtung umfassen, welche zur Überwachung des Betriebs der ersten Fräseinheit und/oder zweiten Fräseinheit und zur Erzeugung einer den Betrieb der ersten Fräseinheit und/oder der zweiten Fräseinheit beschreibenden Überwachungsinformation eingerichtet ist. Eine Überwachung des Betriebs der ersten Fräseinheit und/oder der zweiten Fräseinheit kann auch eine Überwachung des Bearbeitungsergebnisses und/oder -fortschritts der jeweiligen Fräseinheit und die Erzeugung einer das jeweilige Bearbeitungsergebnis und/oder den jeweiligen Bearbeitungsfortschritt beschreibenden Information beinhalten; diese Information kann in die Überwachungsinformation eingehen.

Die Überwachungseinrichtung kann z. B. als eine optische Überwachungseinrichtung, wie z. B. eine Bild- oder Videoaufnahmeeinrichtung, ausgebildet sein oder wenigstens eine solche umfassen. Denkbar sind alternativ oder ergänzend gleichermaßen andere Überwachungseinrichtungen, wie z. B. akustische Überwachungseinrichtungen, als sich auch aus überwachten akustischen Signalen eine Information über den Betrieb der ersten und/oder zweiten Fräseinheit ableiten lassen können.

Die Steuereinrichtung kann eingerichtet sein, einen jeweiligen Bearbeitungsbereich und/oder die Zuordnung jeweiliger Bearbeitungsbereiche auf Basis der Überwachungsinformation anzupassen bzw. zu ändern. Mithin kann eine Anpassung bzw. Veränderung jeweiliger Bearbeitungsbereiche unter Berücksichtigung des Betriebs jeweiliger Fräseinheiten bzw. des Bearbeitungsergebnisses und/oder -fortschritts jeweiliger Fräseinheiten erfolgen, was zu einer hocheffizienten spanenden Bearbeitung eines Werkstücks führen kann.

Wie erwähnt, sind die Fräseinheiten typischerweise zumindest in einem translatorischen Bewegungsfreiheitsgrad relativ zu dem Werkstück bewegbar. Die Bewegung jeweiliger Fräseinheiten in dem translatorischen Bewegungsfreiheitsgrad relativ zu dem Werkstück kann über wenigstens eine Führungseinrichtung, insbesondere wenigstens eine Linearführungseinrichtung, realisiert sein.

Die wenigstens eine Führungseinrichtung kann sich entlang der Bearbeitungs- bzw. Maschinenachse des Bearbeitungszentrums erstrecken. Die wenigstens eine Führungseinrichtung kann ein oder mehrere Führungselemente, insbesondere Linearführungselemente, wie z. B. Führungsschienen, umfassen, welche eingerichtet sind, mit der jeweiligen Fräseinheit unter Ausbildung einer translatorisch bewegbaren Führung zusammenzuwirken. Insbesondere können entsprechende Führungselemente eingerichtet sein, mit einem entsprechenden Gegenführungselement seitens einer jeweiligen Fräseinheit z. B. mechanisch, d. h. insbesondere form- und/oder kraftschlüssig, zusammenzuwirken. Entsprechende Führungselemente können eingerichtet sein, mit einem entsprechenden Gegenführungselement einer jeweiligen Tragstruktur z. B. mechanisch, d. h. insbesondere form- und/oder kraftschlüssig, zusammenzuwirken.

Es ist denkbar, dass die erste Fräseinheit und die zweite Fräseinheit gemeinsam über eine gemeinsame Führungseinrichtung geführt sind, was den Aufbau des Bearbeitungszentrums vereinfachen kann, als nur eine (einzige) Führungseinrichtung erforderlich ist. Alternativ ist es denkbar, dass jede Fräseinheit über eine eigene Führungseinrichtung geführt ist.

Das Bearbeitungszentrum kann ferner eine Abstützeinrichtung umfassen, welche zur Abstützung eines vermittels des Bearbeitungszentrums spanend zu bearbeitenden Werkstücks an einem oder mehreren Abstützpunkten entlang der Längsachse eingerichtet ist. Derart kann ein unerwünschtes Durchhängen des Werkstücks vermieden bzw. zumindest reduziert werden, was die Bearbeitung des Werkstücks mittels der Fräseinheiten gegebenenfalls negativ beeinflussen könnte. Die Abstützeinrichtung kann ein oder mehrere Abstützelemente umfassen, welche jeweils zwischen wenigstens einer Betriebsstellung, in welcher eine Abstützung eines vermittels des Bearbeitungszentrums spanend zu bearbeitenden Werkstücks an einem Abstützpunkt möglich ist, und wenigstens einer Nichtbetriebsstellung, in welcher eine Abstützung eines vermittels des Bearbeitungszentrums spanend zu bearbeitenden Werkstücks an einem oder mehreren Abstützpunkten nicht möglich ist, bewegbar gelagert sein können.

Für alle Ausführungsformen gilt, dass die erste und die zweite Fräseinheit identisch ausgeführt sein können; derart kann gewährleistet werden, dass sich Fräsaufgaben, die mit der ersten Fräseinheit ausgeführt werden (können), nicht von Fräsaufgaben, die mit der zweiten Fräseinheit ausgeführt werden (können), unterscheiden (und umgekehrt). Grundsätzlich denkbar ist jedoch auch, dass die erste und die zweite Fräseinheit nicht identisch ausgeführt sind, sodass sich Fräsaufgaben, die mit der ersten Fräseinheit ausgeführt werden (können), von Fräsaufgaben, die mit der zweiten Fräseinheit ausgeführt werden (können), unterscheiden (und umgekehrt). Beispielsweise kann die erste Fräseinheit ein Spanen mit geometrisch unbestimmter Schneide und die zweite Fräseinheit ein Spanen mit geometrisch bestimmter Schneide ermöglichen. Konkreter kann die erste Fräseinheit z. B. eine Schruppbearbeitung des Werkstücks ermöglichen und die zweite Fräseinheit keine Schruppbearbeitung, sondern z. B. eine Schlichtbearbeitung, ermöglichen.

Für alle Ausführungsformen gilt ferner, dass einzelne, mehrere oder alle der vorgenannten Funktionseinheiten des Bearbeitungszentrums, d. h. insbesondere die Lagerungseinrichtung mit den jeweiligen Lagerungseinheiten (sofern vorhanden), die Fräseinheiten, die Überwachungseinrichtung (sofern vorhanden), die Führungseinrichtung (sofern vorhanden), die Abstützeinrichtung (sofern vorhanden), in einem eine übergeordnete Gehäusestruktur bildenden Maschinengehäuse des Bearbeitungszentrums angeordnet oder ausgebildet sein können. In dem Maschinengehäuse des Bearbeitungszentrums kann zudem das vorgenannte Maschinenbett des Bearbeitungszentrums angeordnet oder ausgebildet sein.

Ein zweiter Aspekt der Erfindung betrifft ein Verfahren zur spanenden Bearbeitung eines länglichen metallischen Werkstücks, insbesondere zur Herstellung eines Antriebselements, insbesondere für einen Bohrstrang. Das Verfahren umfasst insbesondere die folgenden Schritte: Lagern eines vermittels des Bearbeitungszentrums spanend zu bearbeitenden länglichen metallischen Werkstücks, Bewegen einer ersten Fräseinheit in wenigstens einem Bewegungsfreiheitsgrad relativ zu dem gelagerten Werkstück, wobei das Werkstück mit der ersten Fräseinheit wenigstens in einem der ersten Fräseinheit zugeordneten ersten Bearbeitungsbereich spanend bearbeitet wird, Bewegen einer zweiten Fräseinheit in wenigstens einem Bewegungsfreiheitsgrad relativ zu dem gelagerten Werkstück, wobei das Werkstück mit der zweiten Fräseinheit wenigstens in einem der zweiten Fräseinheit zugeordneten zweiten Bearbeitungsbereich spanend bearbeitet wird. Ferner umfasst das Verfahren die die Schritte: Steuern von Bewegungen der ersten Fräseinheit in dem wenigstens einen Bewegungsfreiheitsgrad in den oder innerhalb des der ersten Fräseinheit zugeordneten ersten Bearbeitungsbereichs des Werkstücks, und Steuern von Bewegungen der zweiten Fräseinheit in dem wenigstens einen Bewegungsfreiheitsgrad in den oder innerhalb des der zweiten Fräseinheit zugeordneten zweiten Bearbeitungsbereichs des Werkstücks.

Das Verfahren kann mit einem Bearbeitungszentrum gemäß dem ersten Aspekt der Erfindung durchgeführt werden, sodass sämtliche Ausführungen im Zusammenhang mit dem Bearbeitungszentrum gemäß dem ersten Aspekt der Erfindung analog für das Verfahren gemäß dem zweiten Aspekt der Erfindung gelten (und umgekehrt).

Die Erfindung ist nachfolgend unter Bezugnahme auf die in den Figuren dargestellten Ausführungsbeispiele nochmals erläutert. Dabei zeigen:

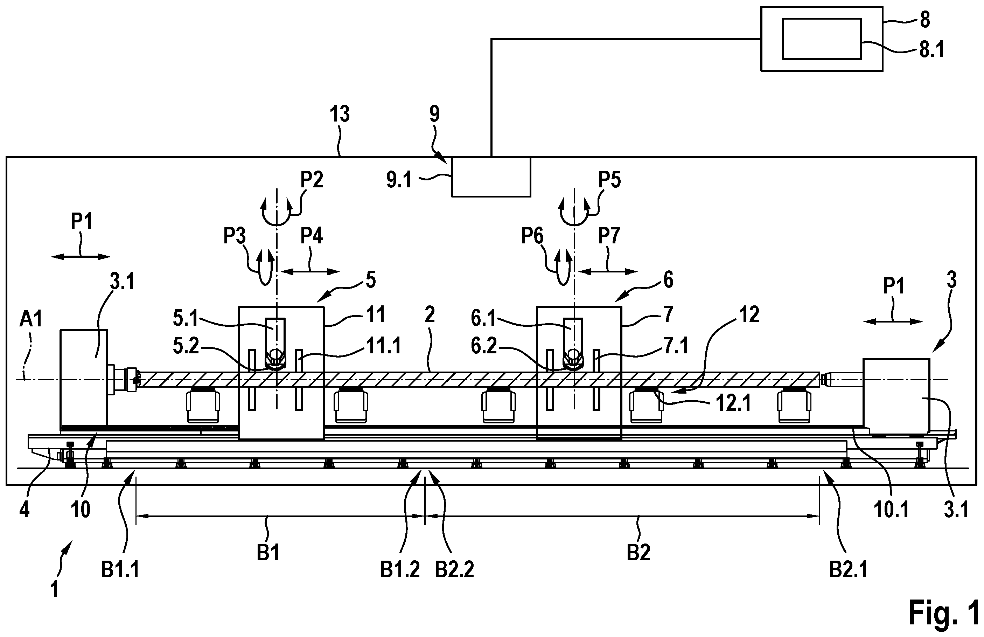

Fig. 1 - 3 Prinzipdarstellungen eines Bearbeitungszentrums gemäß einem Ausführungsbeispiel.

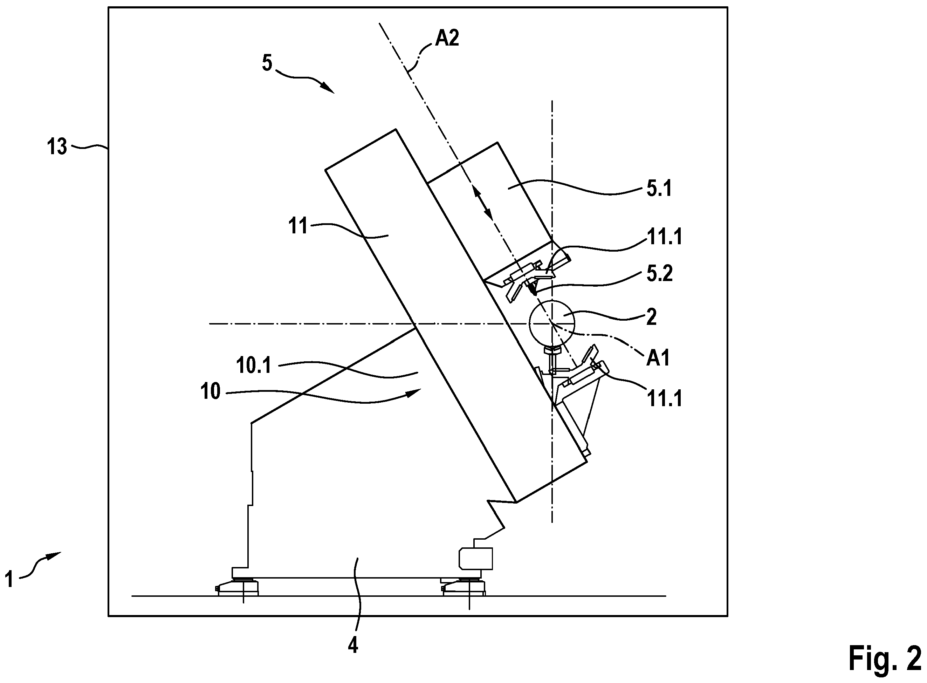

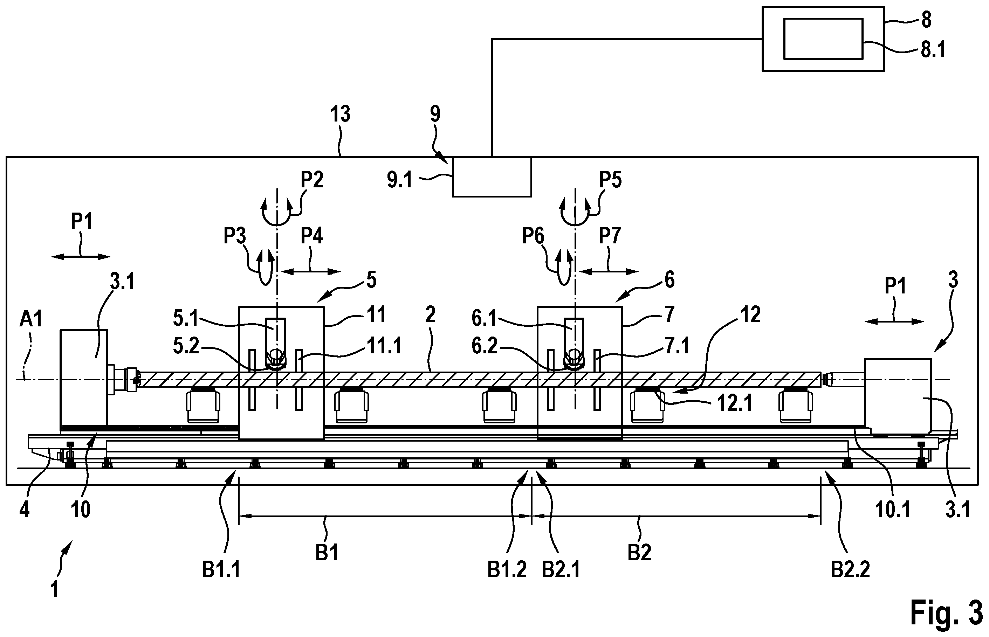

Die Fig. 1 - 3 zeigen Prinzipdarstellungen eines Bearbeitungszentrums 1 gemäß einem Ausführungsbeispiel, wobei die Fig. 1 und 3 jeweils eine Frontansicht und Fig. 2 eine hierzu um 90° gedrehte Ansicht zeigt.

Das Bearbeitungszentrum 1 ist zur spanenden Bearbeitung eines länglichen metallischen Werkstücks 2 mit einer zylindrischen Geometrie bzw. Grundform eingerichtet. Die vermittels des Bearbeitungszentrums 1 ausführbare spanende Bearbeitung des Werkstücks 2 kann insbesondere der Herstellung eines z. B. als Rotor ausgeführten Antriebselements, insbesondere für einen Bohrstrang, dienen. Das Bearbeitungszentrum 1 kann sonach insbesondere zur spanenden Bearbeitung eines entsprechenden Werkstücks 2 zum Zwecke der Herstellung eines z. B. als Rotor ausgeführten Antriebselements, insbesondere für einen Bohrstrang, eingerichtet sein.

Das Bearbeitungszentrum 1 umfasst eine Lagerungseinrichtung 3 zur Lagerung des Werkstücks 2. Die Lagerungseinrichtung 3 kann insbesondere zur drehbaren Lagerung des Werkstücks 2 um dessen Längsachse eingerichtet sein. Hierfür kann Lagerungseinrichtung 3 einen oder mehrere Antriebe umfassen kann, über welche(n) das gelagerte Werkstück 2 in eine Drehbewegung um dessen Längsachse versetzbar ist.

Die Lagerungseinrichtung 3 kann durch eine oder mehrere Lagerungseinheiten 3.1 gebildet sein bzw. eine oder mehrere Lagerungseinheiten 3.1 umfassen. In dem Ausführungsbeispiel umfasst die Lagerungseinrichtung 3 eine erste Lagerungseinheit 3.1, welche zur Lagerung eines ersten Abschnitts, insbesondere eines ersten freien Endes, des Werkstücks 2 eingerichtet ist, und eine zweite Lagerungseinheit 3.1, welche zur Lagerung eines zweiten Abschnitts, insbesondere eines zweiten freien Endes, des Werkstücks 2 eingerichtet ist. Jeweilige Lagerungseinheiten 3.1 können z. B. als Klemm- und/oder Spanneinheiten ausgebildet sein oder solche umfassen, welche für eine klemmende oder spannende Lagerung des Werkstücks 2, d. h. insbesondere jeweiliger erster und zweiter Abschnitte des Werkstücks 2, eingerichtet sind. Konkrete Ausführungsbeispiele entsprechender Lagerungseinheiten 3.1 sind in nicht abschließender Aufzählung Spannfutter, Reitstöcke, etc.

Jeweilige Lagerungseinheiten 3.1 können, wie durch die Doppelpfeile P1 angedeutet, unabhängig ihrer konkreten Ausführungsform in einem translatorischen Bewegungsfreiheitsgrad entlang einer Bearbeitungs- bzw. Maschinenachse A1 des Bearbeitungszentrums 1 relativ zueinander bewegbar gelagert sein. Die Lagerungseinrichtung 3 kann sonach eingerichtet sein, unterschiedlich lange Werkstücke 2 zu lagern, als wenigstens eine Lagerungseinheit 3.1 relativ zu einer anderen Lagerungseinheit 3.1 bewegbar gelagert sein kann. Die Lagerungseinrichtung 3 kann hierfür einen oder mehrere Antriebe umfassen, über welche(n) wenigstens eine Lagerungseinheit 3.1 in eine Bewegung entlang der Bearbeitungs- bzw. Maschinenachse A1 relativ zu einer anderen Lagerungseinheit 3.1 versetzbar ist. Konkret können jeweilige Lagerungseinheiten 3.1 z. B. bewegbar an oder in einem Maschinenbett 4 des Bearbeitungszentrums 1 angeordnet oder ausgebildet sein.

Die Lagerungseinrichtung 3 kann grundsätzlich eingerichtet sein, Werkstücke 2 mit einer Länge von mehr als 5 m, insbesondere mehr als 7,5 m, weiter insbesondere mehr als 10 m, zu lagern. Entsprechend kann das Bearbeitungszentrum 1 eingerichtet sein, Werkstücke 2 mit einer Länge von mehr als 5 m, insbesondere mehr als 7,5 m, weiter insbesondere mehr als 10 m, spanend zu bearbeiten.

Das Bearbeitungszentrum 1 umfasst weiterhin eine in wenigstens einem Bewegungsfreiheitsgrad, hierbei kann es sich grundsätzlich um einen translatorischen und/oder um einen rotatorischen Bewegungsfreiheitsgrad handeln, relativ zu dem mittels der Lagerungseinrichtung 3 gelagerten Werkstück 2 bewegbare erste Fräseinheit 5. Die erste Fräseinheit 5 umfasst typischerweise eine Gehäusestruktur 5.1, ein an oder in der Gehäusestruktur 5.1 angeordnetes, um eine Werkzeugachse A2 drehbares Fräswerkzeug 5.2 (vgl. Fig. 2) sowie einen an oder in der Gehäusestruktur 5.1 angeordneten, dem Fräswerkzeug 5.2 zugeordneten Antrieb, welcher eingerichtet ist, eine das Fräswerkzeug 5.2 in eine Drehbewegung versetzende Antriebskraft zu erzeugen und auf das Fräswerkzeug 5.2 zu übertragen. Konkret kann die erste Fräseinheit 5 als Fräskopf ausgebildet sein, welcher eine entsprechende Gehäusestruktur 5.1 und wenigstens ein an oder in der Gehäusestruktur 5.1 angeordnetes Fräswerkzeug 5.2 umfasst.

Im Zusammenhang mit Fig. 2 ist zu ergänzen, dass die erste Fräseinheit 5, wie durch den Doppelpfeil angedeutet, typischerweise auch translatorisch, z. B. entlang der Achse A2, gegen das Werkstück 2 bewegbar ist; Entsprechendes gilt typischerweise für die zweite Fräseinheit 6, welche sonach ebenso in einem solchen translatorischen Bewegungsfreiheitsgrad bewegbar gelagert ist.

Die Gehäusestruktur 5.1 der ersten Fräseinheit 5 ist mittelbar oder unmittelbar an einer, z. B. schlittenartig ausgeführten, Tragstruktur 11 angeordnet, welche translatorisch entlang der Bearbeitungs- bzw. Maschinenachse A1 bewegbar ist. Die Tragstruktur 11 ist, wie durch die Doppelpfeile P2, P3 angedeutet, eingerichtet, die erste Fräseinheit 5 in wenigstens einem Schwenkbewegungsfreiheitsgrad um z. B. parallel oder rechtwinklig zu der Bearbeitungs- bzw. Maschinenachse A1 ausgerichtete Schwenkachsen schwenkbeweglich zu lagern und kann hierfür einen oder mehrere Antriebe umfassen. Insbesondere der durch den Doppelpfeil P3 angedeutete Bewegungsfreiheitsgrad ist dabei optional. Die Tragstruktur 11 umfasst zudem, wie Fig. 2 beispielhaft zeigt, ein oder mehrere Stützelemente 11.1, welche eingerichtet sind, das Werkstück 2 zu stützen. Wenigstens ein Stützelement 11.1 kann hierfür über einen oder mehrere Antriebe, z. B. radial bezüglich der Längsachse des Werkstücks 2, gegen das Werkstück 2 bewegt werden, um das Werkstück 2 im Bereich der Tragstruktur 11 und damit im Bereich der Bearbeitung durch die erste Fräseinheit 5 zu stützen.

Um die erste Fräseinheit 5 in eine Bewegung relativ zu dem mittels der Lagerungseinrichtung 3 gelagerten Werkstück 2 zu versetzen, umfasst das Bearbeitungszentrum 1 wenigstens einen der ersten Fräseinheit 5 zugeordneten Antrieb, welcher eingerichtet ist, eine die erste Fräseinheit 5 in eine Bewegung relativ zu dem mittels der Lagerungseinrichtung 3 gelagerten Werkstück 2 versetzende Antriebskraft zu erzeugen und auf die erste Fräseinheit 5 zu übertragen. Bei dieser Bewegung der ersten Fräseinheit 5 handelt es sich um eine durch den Doppelpfeil P4 angedeutete Translationsbewegung entlang einer Translationsachse, die mit der Bearbeitungs- oder Maschinenachse A1 zusammenfallen oder parallel zu dieser angeordnet sein kann.

In dem Ausführungsbeispiel ist die erste Fräseinheit 5 zusätzlich zu dem translatorischen Bewegungsfreiheitsgrad relativ zu dem mittels der Lagerungseinrichtung 3 gelagerten Werkstück 2 beispielhaft in zwei durch die Doppelpfeile P2, P3 angedeuteten Schwenkbewegungsfreiheitsgraden um eine zu der Bearbeitungs- oder Maschinenachse A1 parallele Schwenkachse und um einen hierzu senkrechte Schwenkachse bewegbar. Mithin kann die erste Fräseinheit 5 in dem Ausführungsbeispiel in einem Translationsbewegungsfreiheitsgrad und in zwei Rotations- bzw. Schwenkbewegungsfreiheitsgraden relativ zu dem mittels der Lagerungseinrichtung 3 gelagerten Werkstück 2 bewegbar sein. Derart können vermittels der ersten Fräseinheit 5 komplexe Fräsaufgaben realisiert werden, mithin komplexe Geometrien in das Werkstück 2 eingebracht werden.

Das Bearbeitungszentrum 1 umfasst weiterhin eine in wenigstens einem Bewegungsfreiheitsgrad, hierbei kann es sich grundsätzlich um einen translatorischen und/oder um einen rotatorischen Bewegungsfreiheitsgrad handeln, relativ zu dem mittels der Lagerungseinrichtung 3 gelagerten Werkstück 2 bewegbare zweite Fräseinheit 6. Die zweite Fräseinheit 6 umfasst typischerweise eine Gehäusestruktur 6.1, ein an oder in der Gehäusestruktur 6.1 angeordnetes, um eine Werkzeugachse drehbares Fräswerkzeug 6.2 sowie einen an oder in der Gehäusestruktur 6.1 angeordneten, dem Fräswerkzeug 6.2 zugeordneten Antrieb, welcher eingerichtet ist, eine das Fräswerkzeug 6.2 in eine Drehbewegung versetzende Antriebskraft zu erzeugen und auf das Fräswerkzeug 6.2 zu übertragen. Konkret kann die zweite Fräseinheit 6 als Fräskopf ausgebildet sein, welcher eine entsprechende Gehäusestruktur 6.1 und wenigstens ein an oder in der Gehäusestruktur 6.1 angeordnetes Fräswerkzeug 6.2 umfasst.

Auch die Gehäusestruktur 6.1 der zweiten Fräseinheit 6 ist mittelbar oder unmittelbar an einer, z. B. schlittenartig ausgeführten, Tragstruktur 7 angeordnet, welche translatorisch entlang der Bearbeitungs- bzw. Maschinenachse A1 bewegbar ist. Die Tragstruktur 7 ist, wie durch die Doppelpfeile P5, P6 angedeutet, eingerichtet, die zweite Fräseinheit 6 in wenigstens einem Schwenkbewegungsfreiheitsgrad um eine z. B. parallel oder rechtwinklig zu der Bearbeitungs- bzw. Maschinenachse A1 ausgerichtete Schwenkachsen schwenkbeweglich zu lagern und kann hierfür einen oder mehrere Antriebe umfassen. Insbesondere der durch den Doppelpfeil P6 angedeutete Bewegungsfreiheitsgrad ist dabei optional. Die Tragstruktur 7 umfasst zudem ein oder mehrere Stützelemente 7.1, welche eingerichtet sind, das Werkstück 2 zu stützen. Wenigstens ein Stützelement 7.1 kann hierfür über einen oder mehrere Antriebe, z. B. radial bezüglich der Längsachse des Werkstücks 2, gegen das Werkstück 2 bewegt werden, um das Werkstück 2 im Bereich der Tragstruktur 7 und damit im Bereich der Bearbeitung durch die zweite Fräseinheit 6 zu stützen.

Um die zweite Fräseinheit 6 in eine Bewegung relativ zu dem mittels der Lagerungseinrichtung 3 gelagerten Werkstück 2 zu versetzen, umfasst das Bearbeitungszentrum 1 wenigstens einen der zweiten Fräseinheit 6 zugeordneten Antrieb, welcher eingerichtet ist, eine die zweite Fräseinheit 6 in eine Bewegung relativ zu dem mittels der Lagerungseinrichtung 3 gelagerten Werkstück 2 versetzende Antriebskraft zu erzeugen und auf die zweite Fräseinheit 6 zu übertragen. Bei dieser Bewegung der zweiten Fräseinheit 6 handelt es sich um eine durch den Doppelpfeil P7 angedeutete Translationsbewegung entlang einer Translationsachse, die mit der Bearbeitungs- oder Maschinenachse A1 zusammenfallen oder parallel zu dieser angeordnet sein kann.

In dem Ausführungsbeispiel ist die zweite Fräseinheit 6 zusätzlich zu dem translatorischen Bewegungsfreiheitsgrad relativ zu dem mittels der Lagerungseinrichtung 3 gelagerten Werkstück 2 beispielhaft in zwei durch die Doppelpfeile P5, P6 angedeuteten Schwenkbewegungsfreiheitsgraden um eine zu der Bearbeitungs- oder Maschinenachse A1 parallele Schwenkachse und um einen hierzu senkrechte Schwenkachse bewegbar. Mithin kann die zweite Fräseinheit 6 in dem Ausführungsbeispiel in einem Translationsbewegungsfreiheitsgrad und in zwei Rotations- bzw. Schwenkbewegungsfreiheitsgraden relativ zu dem mittels der Lagerungseinrichtung 3 gelagerten Werkstück 2 bewegbar sein. Derart können vermittels der zweiten Fräseinheit 6 komplexe Fräsaufgaben realisiert werden, mithin komplexe Geometrien in das Werkstück 2 eingebracht werden.

Anhand des Ausführungsbeispiels ist ersichtlich, dass jede Fräseinheit 5, 6 sowohl in einem Translationsbewegungsfreiheitsgrad translatorisch entlang der Bearbeitungs- oder Maschinenachse A1 als auch in einem oder mehreren Schwenkbewegungsfreiheitsgraden um eine zu der Bearbeitungs- oder Maschinenachse A1 parallele und/oder senkrechte Schwenkachse bewegbar gelagert sein kann. Die translatorischen Bewegungen und/oder die Schwenkbewegungen der Fräseinheiten 5, 6 sind dabei typischerweise auf eine Drehbewegung des Werkstücks 2 um dessen Längsachse abgestimmt bzw. zu dieser synchronisiert.

Das Bearbeitungszentrum 1 umfasst weiterhin eine hardware- und/oder softwaremäßig implementierte Steuereinrichtung 8, welche zur Steuerung von Bewegungen der ersten Fräseinheit 5 in dem oder den jeweiligen Bewegungsfreiheitsgraden in einen oder innerhalb eines der ersten Fräseinheit 5 zugeordneten ersten Bearbeitungsbereichs B1 eines bzw. des mittels der Lagerungseinrichtung 3 gelagerten Werkstücks 2 und zur Steuerung von Bewegungen der zweiten Fräseinheit 6 in dem oder den jeweiligen Bewegungsfreiheitsgraden in einen oder innerhalb eines der zweiten Fräseinheit 6 zugeordneten zweiten Bearbeitungsbereichs B2 des mittels der Lagerungseinrichtung 3 gelagerten Werkstücks 2, eingerichtet ist. Ein jeweiliger Bearbeitungsbereich B1, B2 umfasst typischerweise wenigstens eine durch einen Anfangspunkt B1.1, B2.1 und einen Endpunkt B1.1, B2.2 bestimmte Bearbeitungsstrecke, innerhalb welcher sich die jeweilige Fräseinheit 5, 6 im Rahmen der Bearbeitung des jeweiligen Bearbeitungsbereichs B1, B2 bewegt oder bewegen kann. Ein jeweiliger Bearbeitungsbereich B1, B2 entspricht typischerweise einem Bereich bzw. Teilbereich des Werkstücks 2, welcher mittels des Bearbeitungszentrums 1 zu bearbeiten ist; jeweilige Bearbeitungsbereiche B1, B2 bilden sonach typischerweise gemeinsam den insgesamt mittels des Bearbeitungszentrums 1 zu bearbeitenden Bereich des Werkstücks 2 ab.

Jeder Fräseinheit 5, 6 ist bzw. wird sonach typischerweise wenigstens ein Bearbeitungsbereich B1, B2 zugeordnet, welchen die jeweilige Fräseinheit 5, 6 spanend zu bearbeiten hat; das Werkstück 2 kann durch das Vorsehen der wenigstens zwei Fräseinheiten 5, 6 sonach, insbesondere zeitgleich, in verschiedenen Bereichen - diese entsprechen den Bearbeitungsbereichen B1, B2 der jeweiligen Fräseinheiten 5, 6 - spanend bearbeitet werden, was die Effizienz der mit dem Bearbeitungszentrum 1 möglichen spanenden Bearbeitung im Vergleich zu Bearbeitungszentren mit nur einer Fräseinheit deutlich erhöht.

Die Steuereinrichtung 8 ist typischerweise auch eingerichtet, jeweilige Bearbeitungsbereiche B1, B2 zu definieren bzw. zu erzeugen und den Fräseinheiten 5, 6 zuzuordnen. Die Steuereinrichtung 8 kann sonach eingerichtet sein, eine Bearbeitungsaufgabe eines Werkstücks 2 durch entsprechende Erzeugung bzw. Definition und Zuordnung von Bearbeitungsbereichen B1, B2 im Sinne einer Bearbeitungsjob-Planung festzulegen und, wie sich im Weiteren ergibt, gegebenenfalls sogar im Betrieb des Bearbeitungszentrums 1 anzupassen. Konkret kann die Steuereinrichtung 8 eingerichtet sein, der ersten Fräseinheit 5 den ersten Bearbeitungsbereich B1 zuzuordnen und der zweiten Fräseinheit 6 den zweiten Bearbeitungsbereich B2 zuzuordnen.

Hierbei kann die Steuereinrichtung 8 einen oder mehrere Eingangsparameter berücksichtigen; mithin kann die Steuereinrichtung 8 eingerichtet sein, jeweilige Bearbeitungsbereiche B1, B2 auf Grundlage wenigstens eines Eingangsparameters zu erzeugen und den Fräseinheiten 5, 6 zuzuordnen. Entsprechende Eingangsparameter können beispielsweise und damit nicht abschließend sein: geometrisch-konstruktive Parameter, wie z. B. Abmessungen, Geometrie, etc., des zu bearbeitenden Werkstücks 2, geometrisch-konstruktive Parameter, wie z. B. Abmessungen, Geometrie, etc., des bearbeiteten Werkstücks 2, Materialparameter des Werkstücks 2, wie z. B. Härte, Spanbarkeit, etc., Parameter der Fräseinheiten 5, 6, wie z. B. Leistungsaufnahme, oder Parameter der Fräswerkzeuge 5.2, 6.2, wie z. B. Art der Fräswerkzeuge 5.2, 6.2, Geometrie der Fräswerkzeuge 5.2, 6.2, Härte der Fräswerkzeuge 5.2, 6.2, etc.

Die vermittels der Steuereinrichtung 8 mögliche Steuerung von Bewegungen der ersten Fräseinheit 5 in den oder innerhalb des dieser zugeordneten ersten Bearbeitungsbereichs B1 und die Steuerung von Bewegungen der zweiten Fräseinheit 6 in den oder innerhalb des dieser zugeordneten zweiten Bearbeitungsbereichs B2 kann zudem die Steuerung ein oder mehrerer Betriebsparameter, wie z. B. der Leistungsaufnahme, der jeweilig Fräseinheiten 5, 6 zur Bearbeitung des Werkstücks 2 in dem jeweiligen Bearbeitungsbereich B1, B2 beinhalten.

Der Steuereinrichtung 8 kann eine hardware- und/oder softwaremäßig implementierte Benutzerschnittstelle 8.1 zugeordnet sein, über welche ein Benutzer steuerungstechnische Eingaben tätigen kann; insbesondere kann es über die Benutzerschnittstelle 8.1 möglich sein, Eingaben hinsichtlich der Planung und/oder Anpassung von Bearbeitungsjobs eines Werkstücks 2 zu tätigen, auf Grundlage welcher die Steuereinrichtung 8 eine Bearbeitungsaufgabe eines Werkstücks 2 durch entsprechende Erzeugung bzw. Definition und Zuordnung von Bearbeitungsbereichen B1, B2 im Sinne einer Bearbeitungsjob-Planung festlegt und gegebenenfalls sogar im Betrieb des Bearbeitungszentrums 1 anpasst.

Die Steuereinrichtung 8 kann insbesondere eingerichtet sein, Bewegungen der ersten Fräseinheit 5 in dem wenigstens einen Bewegungsfreiheitsgrad abhängig oder unabhängig von Bewegungen der zweiten Fräseinheit 6 in dem wenigstens einen Bewegungsfreiheitsgrad zu steuern, oder umgekehrt. Mithin können Steuerungen von Bewegungen der ersten Fräseinheit 5 in dem wenigstens einen Bewegungsfreiheitsgrad abhängig von und damit unter Berücksichtigung von Bewegungen der zweiten Fräseinheit 6 in dem wenigstens einen Bewegungsfreiheitsgrad erfolgen (oder umgekehrt); derart kann z. B. sichergestellt werden, dass die Fräseinheiten 5, 6 in einem gewünschten Maß voneinander beabstandet arbeiten, um Situationen zu vermeiden, in welchen sich die spanende Bearbeitung eines Werkstücks 2 vermittels der ersten Fräseinheit 5 in dem ersten Bearbeitungsbereich B1 möglicherweise negativ auf die spanende Bearbeitung des Werkstücks 2 in dem zweiten Bearbeitungsbereich B2 auswirkt (oder umgekehrt). Steuerungstechnisch einfacher zu realisieren kann eine Variante sein, in welcher Bewegungen der ersten Fräseinheit 5 in dem wenigstens einen Bewegungsfreiheitsgrad unabhängig von Bewegungen der zweiten Fräseinheit 6 in dem wenigstens einen Bewegungsfreiheitsgrad gesteuert werden, mithin jeweilige Fräseinheiten 5, 6 innerhalb deren jeweiliger Bearbeitungsbereiche B1, B2 unabhängig voneinander arbeiten.

Wie erwähnt, kann die Steuereinrichtung 8 eingerichtet sein, der ersten Fräseinheit 5 den bzw. einen ersten Bearbeitungsbereich B1 zuzuordnen und der zweiten Fräseinheit 6 den bzw. einen zweiten Bearbeitungsbereich B2 zuzuordnen. Dies kann auch beinhalten, dass die Steuereinrichtung 8 eingerichtet ist, die Bearbeitung, d. h. insbesondere die komplette Bearbeitung, des der ersten Fräseinheit 5 zugeordneten ersten Bearbeitungsbereichs B1 mittels der ersten Fräseinheit 5 und die Bearbeitung, d. h. insbesondere die komplette Bearbeitung, des der zweiten Fräseinheit 6 zugeordneten zweiten Bearbeitungsbereichs B2 mittels der zweiten Fräseinheit 6 zu steuern.

Wie ebenso erwähnt, umfasst ein jeweiliger Bearbeitungsbereich B1, B2 typischerweise wenigstens eine durch einen Anfangspunkt B1.1, B2.1 und einen Endpunkt B1.2, B2.2 bestimmte Bearbeitungsstrecke. Ein jeweiliger Anfangspunkt B1.1, B2.1 oder Endpunkt B1.2, B2.2 kann, wie in Fig. 1 beispielhaft gezeigt, an oder in einem Randbereich bezüglich der Längsachse des Werkstücks 2 oder, wie in Fig. 3 beispielhaft gezeigt, innerhalb des Werkstücks 2 liegen. Mithin kann die Bearbeitung eines Werkstücks 2 z. B. mit der ersten Fräseinheit 5 ausgehend von einem ersten Randbereich des Werkstücks 2, wie z. B. einem ersten freien Ende des Werkstücks 2, erfolgen; die erste Fräseinheit 5 kann im Rahmen der Bearbeitung des Werkstücks 2 sonach z. B. ausgehend von dem den Anfangspunkt B1.1 des ersten Bearbeitungsbereichs B1 aufweisenden Randbereich in Richtung des Endpunkts B1.2 bewegt werden. Der Endpunkt B1.2 des ersten Bearbeitungsbereichs B2 kann sonach in Richtung des zweiten freien Endes des Werkstücks 2 versetzt liegen ("Bearbeitung von außen nach innen"). Auch eine umgekehrte Vorgehensweise ist jedoch möglich ("Bearbeitung von innen nach außen"). In analoger Weise kann die Bearbeitung des Werkstücks 2 mit der zweiten Fräseinheit 6 ausgehend von einem zweiten Randbereich des Werkstücks 2, wie z. B. einem zweiten freien Ende des Werkstücks 2, erfolgen; die zweite Fräseinheit 6 kann im Rahmen der Bearbeitung des Werkstücks 2 sonach z. B. ausgehend von dem den Anfangspunkt B2.1 des zweiten Bearbeitungsbereichs B2 aufweisenden Randbereich in Richtung des Endpunkts B2.2 bewegt werden. Der Endpunkt B2.2 des zweiten Bearbeitungsbereichs B2 kann sonach in Richtung des ersten freien Endes des Werkstücks 2 versetzt liegen ("Bearbeitung von außen nach innen"). Auch hier ist eine umgekehrte Vorgehensweise ("Bearbeitung von innen nach außen") möglich.

Alternativ oder ergänzend kann ein Anfangspunkt B1.1, B2.1 oder Endpunkt B1.2, B2.2 wenigstens eines Bearbeitungsbereichs B1, B2 beabstandet zu einem Randbereich bezüglich der Längsachse des Werkstücks 2 oder innerhalb des Werkstücks 2 liegen. Mithin sind auch Varianten denkbar, in welchen eine Fräseinheit 5, 6 (nur) die Randbereiche eines Werkstücks 2 bearbeitet, z. B. um in diesen bestimmte Schnittstellen auszubilden, und eine andere Fräseinheit 5, 6 die übrigen (inneren) Bereiche des Werkstücks 2 bearbeitet, z. B. um in diesen eine für die bestimmungsgemäße Funktion des bearbeiteten Werkstücks 2 erforderliche Funktionsgeometrie auszubilden.

Grundsätzlich gilt, dass der erste und der zweite Bearbeitungsbereich B1, B2 einander zumindest abschnittsweise (axial bezüglich der Längsachse des Werkstücks 2) überlappen können oder einander nicht überlappen können. In der ersten Variante kann der Anfangspunkt B1.1 und/oder Endpunkt B1.2 des ersten Bearbeitungsbereichs B1 sonach innerhalb des zweiten Bearbeitungsbereichs B2 liegen (oder umgekehrt), woraus sich ein überlappender Bereich ergibt, in welchem eine Bearbeitung des Werkstücks 2 durch beide Fräseinheiten 5, 6 möglich ist. Dies kann z. B. sinnvoll sein, wenn ein (unbearbeitetes) Werkstück 2 initial bearbeitet wird; mithin kann eine initiale Bearbeitung des Werkstücks 2 in einem als Initialbereich bezeichenbaren Bereich nur durch eine Fräseinheit 5, 6 erfolgen, woraufhin die andere Fräseinheit 5, 6 ihre Bearbeitung des Werkstücks 2 an bzw. in dem zuvor initial bearbeiteten Bereich (Initialbereich) beginnt. Die den jeweiligen Fräseinheiten 5, 6 zugeordneten Bearbeitungsbereiche B1, B2 können sich sonach zumindest in einem einen entsprechenden initialen Bereich umfassenden Bereich des Werkstücks 2 überlappen. In der zweiten Variante liegt der Anfangspunkt B1.1 und/oder Endpunkt B1.2 des ersten Bearbeitungsbereichs B1 außerhalb des zweiten Bearbeitungsbereichs B2 (oder umgekehrt), sodass keine oder weniger steuerungstechnische, d. h. insbesondere sicherheitsrelevante, Maßnahmen vorgehalten werden müssen, um z. B. eine unerwünschte Annäherung oder Kollision der Fräseinheiten 5, 6 zu vermeiden.

Wie angedeutet, kann die Steuereinrichtung 8 eingerichtet sein, den ersten und/oder zweiten Bearbeitungsbereich B1, B2 anzupassen bzw. zu verändern. Mithin kann der einer jeweiligen Fräseinheit 5, 6 (ursprünglich) zugeordnete Bearbeitungsbereich B1, B2 verändert, d. h. insbesondere vergrößert oder verkleinert, werden. Die Steuereinrichtung 8 kann sonach auch eingerichtet sein, die Zuordnung der ersten Fräseinheit 5 zu dem ersten Bearbeitungsbereich B1 zu ändern, sodass die erste Fräseinheit 5 zumindest abschnittsweise auch dem zweiten Bearbeitungsbereich B2 zuordenbar oder zugeordnet ist. Alternativ oder ergänzend kann die Steuereinrichtung 8 eingerichtet sein, die Zuordnung der zweiten Fräseinheit 6 zu dem zweiten Bearbeitungsbereich B2 zu ändern, sodass die zweite Fräseinheit 6 zumindest abschnittsweise auch dem ersten Bearbeitungsbereich B1 zuordenbar oder zugeordnet ist.

Die Anpassung bzw. Veränderung eines jeweiligen Bearbeitungsbereichs B1, B2 kann insbesondere dynamisch erfolgen. Die Anpassung bzw. Veränderung eines jeweiligen Bearbeitungsbereichs B1, B2 kann insbesondere während der spanenden Bearbeitung eines Werkstücks 2, mithin während des Betriebs der Fräseinheiten 5, 6 erfolgen und eröffnet ein hohes Maß an Flexibilität im Zusammenhang mit der Bearbeitung eines Werkstücks 2, etwa weil eine Möglichkeit geschaffen ist, dass eine Fräseinheit 5, 6 (auch) in wenigstens einem dieser ursprünglich nicht zugeordneten Bereich des Werkstücks 2 arbeiten kann. Derart können z. B. Bearbeitungsverzögerungen der anderen Fräseinheit 5, 6 Rechnung getragen werden. Die Möglichkeit der Anpassung des ersten und/oder zweiten Bearbeitungsbereichs B1, B2 kann sich sonach auch positiv auf die Effizienz des Bearbeitungszentrums 1 auswirken.

Das Bearbeitungszentrum 1 kann eine Überwachungseinrichtung 9 umfassen, welche zur Überwachung des Betriebs der ersten und/oder zweiten Fräseinheit 5, 6 und zur Erzeugung einer den Betrieb der ersten und/oder der zweiten Fräseinheit 5, 6 beschreibenden Überwachungsinformation eingerichtet ist. Eine Überwachung des Betriebs der ersten und/oder der zweiten Fräseinheit 5, 6 kann auch eine Überwachung des Bearbeitungsergebnisses und/oder -fortschritts der jeweiligen Fräseinheit 5, 6 und die Erzeugung einer das jeweilige Bearbeitungsergebnis und/oder den jeweiligen Bearbeitungsfortschritt beschreibenden Information beinhalten; diese Information kann in die Überwachungsinformation eingehen.

Die Überwachungseinrichtung 9 kann z. B. als eine optische Überwachungseinrichtung, wie z. B. eine Bild- oder Videoaufnahmeeinrichtung 9.1, ausgebildet sein oder wenigstens eine solche umfassen. Denkbar sind alternativ oder ergänzend gleichermaßen anders konfigurierte Überwachungseinrichtungen, wie z. B. akustische Überwachungseinrichtungen, als sich auch aus überwachten akustischen Signalen eine Information über den Betrieb der ersten und/oder zweiten Fräseinheit 5, 6 ableiten lassen können.

Die Steuereinrichtung 8 kann eingerichtet sein, einen jeweiligen Bearbeitungsbereich B1, B2 und/oder die Zuordnung jeweiliger Bearbeitungsbereiche B1, B2 auf Basis der Überwachungsinformation anzupassen bzw. zu ändern. Mithin kann eine Anpassung bzw. Veränderung jeweiliger Bearbeitungsbereiche B1, B2 unter Berücksichtigung des Betriebs jeweiliger Fräseinheiten 5, 6 bzw. des Bearbeitungsergebnisses und/oder - fortschritts jeweiliger Fräseinheiten 5, 6 erfolgen, was zu einer hocheffizienten spanenden Bearbeitung eines Werkstücks 2 führen kann.

Wie erwähnt, sind die Fräseinheiten 5, 6 in den Ausführungsbeispielen u.a. in einem translatorischen Bewegungsfreiheitsgrad relativ zu dem Werkstück 2 bewegbar. Die Bewegung jeweiliger Fräseinheiten 5, 6 in dem translatorischen Bewegungsfreiheitsgrad relativ zu dem Werkstück 2 kann über wenigstens eine Führungseinrichtung 10 (vgl. insbesondere Fig. 2), insbesondere wenigstens eine Linearführungseinrichtung, realisiert sein. Die wenigstens eine Führungseinrichtung 10 kann sich entlang der Bearbeitungs- bzw. Maschinenachse A1 erstrecken. Die wenigstens eine Führungseinrichtung 10 kann ein oder mehrere Führungselemente 10.1, insbesondere Linearführungselemente, wie z. B. Führungsschienen, umfassen, welche eingerichtet sind, mit der jeweiligen Fräseinheit 5, 6 unter Ausbildung einer translatorisch bewegbaren Führung zusammenzuwirken. Insbesondere können entsprechende Führungselemente 10.1 eingerichtet sein, mit einem entsprechenden Gegenführungselement seitens einer jeweiligen Fräseinheit 5, 6 z. B. mechanisch, d. h. insbesondere form- und/oder kraftschlüssig, zusammenzuwirken. Entsprechende Führungselemente 10.1 können eingerichtet sein, mit einem entsprechenden Gegenführungselement einer jeweiligen Tragstruktur 11, 7 z. B. mechanisch, d. h. insbesondere form- und/oder kraftschlüssig, zusammenzuwirken.

In den Ausführungsbeispielen ist beispielhaft gezeigt, dass die erste Fräseinheit 5 und die zweite Fräseinheit 6 gemeinsam über eine gemeinsame Führungseinrichtung 10 geführt sein können, was den Aufbau des Bearbeitungszentrums 1 vereinfachen kann, als nur eine (einzige) Führungseinrichtung 10 erforderlich ist. Alternativ ist es denkbar, dass jede Fräseinheit 5, 6 über eine eigene Führungseinrichtung 10 geführt ist.

Das Bearbeitungszentrum 1 kann ferner eine Abstützeinrichtung 12 umfassen, welche zur Abstützung eines vermittels des Bearbeitungszentrums 1 spanend zu bearbeitenden Werkstücks 2 an einem oder mehreren Abstützpunkten entlang der Längsachse des Werkstücks 2 eingerichtet ist. Derart kann ein unerwünschtes Durchhängen des Werkstücks 2 vermieden bzw. zumindest reduziert werden, was die Bearbeitung des Werkstücks 2 mittels der Fräseinheiten 5, 6 gegebenenfalls negativ beeinflussen könnte. Die Abstützeinrichtung 12 umfasst in den Ausführungsbeispielen mehrere Abstützelemente 12.1 umfassen, welche jeweils zwischen wenigstens einer Betriebsstellung, in welcher eine Abstützung eines Werkstücks 2 an einem Abstützpunkt möglich ist, und wenigstens einer Nichtbetriebsstellung, in welcher eine Abstützung eines Werkstücks 2 an einem oder mehreren Abstützpunkten nicht möglich ist, bewegbar gelagert sein können.

Für alle Ausführungsbeispiele gilt, dass die erste Fräseinheit 5 und die zweite Fräseinheit 6 identisch ausgeführt sein können; derart kann gewährleistet werden, dass sich Fräsaufgaben, die mit der ersten Fräseinheit 5 ausgeführt werden (können), nicht von Fräsaufgaben, die mit der zweiten Fräseinheit 6 ausgeführt werden (können), unterscheiden (und umgekehrt). Grundsätzlich denkbar ist jedoch auch, dass die erste und die zweite Fräseinheit 5, 6 nicht identisch ausgeführt sind, sodass sich Fräsaufgaben, die mit der ersten Fräseinheit 5 ausgeführt werden (können), von Fräsaufgaben, die mit der zweiten Fräseinheit 6 ausgeführt werden (können), unterscheiden (und umgekehrt). Beispielsweise kann die erste Fräseinheit 5 ein Spanen mit geometrisch unbestimmter Schneide und die zweite Fräseinheit 6 ein Spanen mit geometrisch bestimmter Schneide ermöglichen. Konkreter kann die erste Fräseinheit 5 z. B. eine Schruppbearbeitung des Werkstücks ermöglichen und die zweite Fräseinheit 6 keine Schruppbearbeitung, sondern z. B. eine Schlichtbearbeitung, ermöglichen.

Für alle Ausführungsformen gilt ferner, dass einzelne, mehrere oder alle der vorgenannten Funktionseinheiten des Bearbeitungszentrums 1, d. h. insbesondere die Lagerungseinrichtung 3 mit den jeweiligen Lagerungseinheiten 3.1 (sofern vorhanden), die Fräseinheiten 5, 6, die Überwachungseinrichtung 9 (sofern vorhanden), die Führungseinrichtung 10 (sofern vorhanden), die Abstützeinrichtung 12 (sofern vorhanden), in einem eine übergeordnete Gehäusestruktur bildenden Maschinengehäuse 13 des Bearbeitungszentrums 1 angeordnet oder ausgebildet sein können. In dem Maschinengehäuse 13 des Bearbeitungszentrums 1 kann zudem das vorgenannte Maschinenbett 4 angeordnet oder ausgebildet sein.

Mit den in den Ausführungsbeispielen gezeigten Bearbeitungszentren 1 lässt sich ein Verfahren zur spanenden Bearbeitung eines länglichen metallischen Werkstücks 2, insbesondere zur Herstellung eines Antriebselements, insbesondere für einen Bohrstrang, implementieren. Das Verfahren umfasst insbesondere die folgenden Schritte: Lagern eines vermittels des Bearbeitungszentrums 1 spanend zu bearbeitenden länglichen metallischen Werkstücks 2, Bewegen einer ersten Fräseinheit 5 in wenigstens einem Bewegungsfreiheitsgrad relativ zu dem gelagerten Werkstück 2, wobei das Werkstück 2 mit der ersten Fräseinheit 5 wenigstens in einem der ersten Fräseinheit 5 zugeordneten ersten Bearbeitungsbereich B1 spanend bearbeitet wird, Bewegen einer zweiten Fräseinheit 6 in wenigstens einem Bewegungsfreiheitsgrad relativ zu dem gelagerten Werkstück 2, wobei das Werkstück 2 mit der zweiten Fräseinheit 6 wenigstens in einem der zweiten Fräseinheit 6 zugeordneten zweiten Bearbeitungsbereich B2 spanend bearbeitet wird. Ferner umfasst das Verfahren die die Schritte: Steuern von Bewegungen der ersten Fräseinheit 5 in dem wenigstens einen Bewegungsfreiheitsgrad in den oder innerhalb des der ersten Fräseinheit 5 zugeordneten ersten Bearbeitungsbereichs B1, und Steuern von Bewegungen der zweiten Fräseinheit 6 in dem wenigstens einen Bewegungsfreiheitsgrad in den oder innerhalb des der zweiten Fräseinheit 6 zugeordneten zweiten Bearbeitungsbereichs B2.

## Patentansprüche

1. Bearbeitungszentrum zur spanenden Bearbeitung eines länglichen metallischen Werkstücks (2), insbesondere zur Herstellung eines Antriebselements, insbesondere für einen Bohrstrang, umfassend:
eine Lagerungseinrichtung (3) zur Lagerung eines spanend zu bearbeitenden länglichen metallischen Werkstücks,
eine in wenigstens einem Bewegungsfreiheitsgrad relativ zu einem mittels der Lagerungseinrichtung (3) gelagerten Werkstück (2) bewegbare erste Fräseinheit (5),
eine in wenigstens einem Bewegungsfreiheitsgrad relativ zu einem mittels der Lagerungseinrichtung (3) gelagerten Werkstück (2) bewegbare zweite Fräseinheit (6),
**gekennzeichnet durch** eine Steuereinrichtung (8), welche zur Steuerung von Bewegungen der ersten Fräseinheit (5) in dem wenigstens einen Bewegungsfreiheitsgrad in einen oder innerhalb eines der ersten Fräseinheit (5) zugeordneten ersten Bearbeitungsbereichs (B1) des Werkstücks (2) und
zur Steuerung von Bewegungen der zweiten Fräseinheit (6) in dem wenigstens einen Bewegungsfreiheitsgrad in einen oder innerhalb eines der zweiten Fräseinheit (6) zugeordneten zweiten Bearbeitungsbereichs (B2) des Werkstücks (2), eingerichtet ist,
wobei die Fräseinheiten (5, 6) jeweils eine entlang einer Bearbeitungs- bzw. Maschinenachse bewegbare Tragstruktur (7, 11) aufweisen, welche eingerichtet ist, die jeweilige Fräseinheit (5, 6) in wenigstens einem Schwenkbewegungsfreiheitsgrad schwenkbeweglich zu lagern, und
die jeweilige Tragstruktur (7, 11) zudem ein oder mehrere Stützelemente (7.1, 11.1) umfasst, welche eingerichtet sind, ein zu bearbeitendes Werkstück (2) zu stützen.

2. Bearbeitungszentrum nach Anspruch 1, wobei die Steuereinrichtung (8) eingerichtet ist, Bewegungen der ersten Fräseinheit (5) in dem wenigstens einen Bewegungsfreiheitsgrad abhängig oder unabhängig von Bewegungen der zweiten Fräseinheit (6) in dem wenigstens einen Bewegungsfreiheitsgrad zu steuern, oder umgekehrt.

3. Bearbeitungszentrum nach Anspruch 1 oder 2, wobei die Steuereinrichtung (8) eingerichtet ist, der ersten Fräseinheit (5) den ersten Bearbeitungsbereich (B1) des Werkstücks (2) zuzuordnen und der zweiten Fräseinheit (6) den zweiten Bearbeitungsbereich (B2) des Werkstücks (2) zuzuordnen.

4. Bearbeitungszentrum nach einem der vorhergehenden Ansprüche, wobei ein jeweiliger Bearbeitungsbereich (B1, B2) eine durch einen Anfangs- und einen Endpunkt definierte Bearbeitungsstrecke umfasst, wobei ein jeweiliger Anfangs- oder Endpunkt an einem Randbereich bezüglich der Längsachse des Werkstücks (2) oder innerhalb des Werkstücks (2) liegt.

5. Bearbeitungszentrum nach einem der vorhergehenden Ansprüche, wobei der erste und der zweite Bearbeitungsbereich (B1, B2) einander zumindest abschnittsweise überlappen oder nicht überlappen.

6. Bearbeitungszentrum nach einem der vorhergehenden Ansprüche, wobei die Steuereinrichtung (8) eingerichtet ist, den ersten und/oder den zweiten Bearbeitungsbereich (B1, B2) zu ändern.

7. Bearbeitungszentrum nach einem der vorhergehenden Ansprüche, wobei die Steuereinrichtung (8) eingerichtet ist, die Zuordnung der ersten Fräseinheit (5) zu dem ersten Bearbeitungsbereich (B1) zu ändern, sodass die erste Fräseinheit (5) zumindest abschnittsweise auch dem zweiten Bearbeitungsbereich (B2) zuordenbar oder zugeordnet ist, und/oder die Steuereinrichtung (8) eingerichtet ist, die Zuordnung der zweiten Fräseinheit (6) zu dem zweiten Bearbeitungsbereich (B2) zu ändern, sodass die zweite Fräseinheit (6) zumindest abschnittsweise auch dem ersten Bearbeitungsbereich (B1) zuordenbar oder zugeordnet ist.

8. Bearbeitungszentrum nach einem der vorhergehenden Ansprüche, umfassend eine Überwachungseinrichtung (9) zur Überwachung des Betriebs der ersten und/oder zweiten Fräseinheit und zur Erzeugung einer entsprechenden Überwachungsinformation.

9. Bearbeitungszentrum nach Anspruch 7 oder 8, wobei die Steuereinrichtung (8) eingerichtet ist, einen jeweiligen Bearbeitungsbereich (B1, B2) und/oder die Zuordnung auf Basis der Überwachungsinformation zu ändern.

10. Bearbeitungszentrum nach einem der vorhergehenden Ansprüche, wobei die erste Fräseinheit (5) und die zweite Fräseinheit (6) über eine gemeinsame oder über unterschiedliche Führungseinrichtungen (10) geführt bewegbar gelagert sind.

11. Bearbeitungszentrum nach einem der vorhergehenden Ansprüche, wobei die Lagerungseinrichtung (3) eingerichtet ist, ein vermittels des Bearbeitungszentrums (1) spanend zu bearbeitendes Werkstück (2) um dessen Längsachse drehbar zu lagern.

12. Bearbeitungszentrum nach einem der vorhergehenden Ansprüche, umfassend eine Abstützeinrichtung (12) zur Abstützung eines vermittels des Bearbeitungszentrums (1) spanend zu bearbeitenden Werkstücks (2) an einem oder mehreren Abstützpunkten entlang der Längsachse.

13. Bearbeitungszentrum nach Anspruch 12, wobei die erste und/oder die zweite Fräseinheit in einem translatorischen und/oder rotatorischen Bewegungsfreiheitsgrad relativ zu dem über die Abstützeinrichtung (12) abgestützten Werkstück (2) gelagert sind.

14. Verfahren zur spanenden Bearbeitung eines länglichen metallischen Werkstücks (2), insbesondere zur Herstellung eines Antriebselements, insbesondere für einen Bohrstrang, wobei es mit einem Bearbeitungszentrum (1) nach einem der vorhergehenden Ansprüche durchgeführt wird und die Schritte umfasst:
- Lagern eines vermittels des Bearbeitungszentrums (1) spanend zu bearbeitenden länglichen metallischen Werkstücks (2),
- Bewegen einer ersten Fräseinheit (5) in wenigstens einem Bewegungsfreiheitsgrad relativ zu dem gelagerten Werkstück (2), wobei das Werkstück (2) mit der ersten Fräseinheit (5) wenigstens in einem der ersten Fräseinheit (5) zugeordneten ersten Bearbeitungsbereich (B1) spanend bearbeitet wird,
- Bewegen einer zweiten Fräseinheit (6) in wenigstens einem Bewegungsfreiheitsgrad relativ zu dem gelagerten Werkstück (2), wobei das Werkstück (2) mit der zweiten Fräseinheit (6) wenigstens in einem der zweiten Fräseinheit (6) zugeordneten zweiten Bearbeitungsbereich (B2) spanend bearbeitet wird,
- Steuern von Bewegungen der ersten Fräseinheit (5) in dem wenigstens einen Bewegungsfreiheitsgrad in den oder innerhalb des der ersten Fräseinheit (5) zugeordneten ersten Bearbeitungsbereichs (B1) des Werkstücks (2), und
- Steuern von Bewegungen der zweiten Fräseinheit (6) in dem wenigstens einen Bewegungsfreiheitsgrad in den oder innerhalb des der zweiten Fräseinheit (6) zugeordneten zweiten Bearbeitungsbereichs (B2) des Werkstücks (2).

## Claims

1. Machining center for the machining of an elongate metallic workpiece (2), in particular for producing a drive element, in particular for a drill string, comprising:
a support device (3) for supporting an elongate metallic workpiece to be machined, a first milling unit (5) movable in at least one degree of freedom of movement relative to a workpiece (2) supported by means of the support device (3),
a second milling unit (6) movable in at least one degree of freedom of movement relative to a workpiece (2) supported by means of the support device (3),
**characterized by** a control device (8) configured to control movements of the first milling unit (5) in the at least one degree of freedom of movement into or within a first machining region (B1) of the workpiece (2) assigned to the first milling unit (5), and
to control movements of the second milling unit (6) in the at least one degree of freedom of movement into or within a second machining region (B2) of the workpiece (2) assigned to the second milling unit (6),
wherein the milling units (5, 6) each comprise a support structure (7, 11) movable along a machining axis or machine axis and configured to pivotably support the respective milling unit (5, 6) in at least one pivoting degree of freedom of movement, and
wherein the respective support structure (7, 11) additionally comprises one or more support elements (7.1, 11.1) configured to support a workpiece (2) to be machined.

2. Machining center according to claim 1, wherein the control device (8) is configured to control movements of the first milling unit (5) in the at least one degree of freedom of movement dependently on or independently of movements of the second milling unit (6) in the at least one degree of freedom of movement, or vice versa.

3. Machining center according to claim 1 or 2, wherein the control device (8) is configured to assign the first machining region (B1) of the workpiece (2) to the first milling unit (5) and the second machining region (B2) of the workpiece (2) to the second milling unit (6).

4. Machining center according to any one of the preceding claims, wherein each machining region (B1, B2) comprises a machining path defined by a starting point and an end point, wherein the respective starting point or end point is located at an edge region with respect to the longitudinal axis of the workpiece (2) or within the workpiece (2).

5. Machining center according to any one of the preceding claims, wherein the first and second machining regions (B1, B2) overlap one another at least in sections or do not overlap.

6. Machining center according to any one of the preceding claims, wherein the control device (8) is configured to change the first and/or the second machining region (B1, B2).

7. Machining center according to any one of the preceding claims, wherein the control device (8) is configured to change the assignment of the first milling unit (5) to the first machining region (B1) such that the first milling unit (5) is also assignable or assigned, at least in sections, to the second machining region (B2), and/or the control device (8) is configured to change the assignment of the second milling unit (6) to the second machining region (B2) such that the second milling unit (6) is also assignable or assigned, at least in sections, to the first machining region (B1).

8. Machining center according to any one of the preceding claims, comprising a monitoring device (9) for monitoring operation of the first and/or second milling unit and for generating corresponding monitoring information.

9. Machining center according to claim 7 or 8, wherein the control device (8) is configured to change a respective machining region (B1, B2) and/or the assignment on the basis of the monitoring information.

10. Machining center according to any one of the preceding claims, wherein the first milling unit (5) and the second milling unit (6) are movably supported in a guided manner by means of a common guide device or different guide devices (10).

11. Machining center according to any one of the preceding claims, wherein the support device (3) is configured to rotatably support, about its longitudinal axis, a workpiece (2) to be machined by means of the machining center (1).

12. Machining center according to any one of the preceding claims, comprising a bracing device (12) for bracing a workpiece (2) to be machined by means of the machining center (1) at one or more bracing points along the longitudinal axis.

13. Machining center according to claim 12, wherein the first and/or the second milling unit are supported in a translational and/or rotational degree of freedom of movement relative to the workpiece (2) braced by means of the bracing device (12).

14. Method for machining an elongate metallic workpiece (2), in particular for producing a drive element, in particular for a drill string, wherein the method is carried out using a machining center (1) according to any one of the preceding claims and comprises the steps of:
- supporting an elongate metallic workpiece (2) to be machined by means of the machining center (1),
- moving a first milling unit (5) in at least one degree of freedom of movement relative to the supported workpiece (2), wherein the workpiece (2) is machined with the first milling unit (5) at least in a first machining region (B1) assigned to the first milling unit (5),
- moving a second milling unit (6) in at least one degree of freedom of movement relative to the supported workpiece (2), wherein the workpiece (2) is machined with the second milling unit (6) at least in a second machining region (B2) assigned to the second milling unit (6),
- controlling movements of the first milling unit (5) in the at least one degree of freedom of movement into or within the first machining region (B1) of the workpiece (2) assigned to the first milling unit (5), and
- controlling movements of the second milling unit (6) in the at least one degree of freedom of movement into or within the second machining region (B2) of the workpiece (2) assigned to the second milling unit (6).

## Revendications

1. Centre d'usinage destiné à l'usinage par enlèvement de matière d'une pièce métallique allongée (2), en particulier destiné à la fabrication d'un élément d'entraînement, en particulier pour un train de tiges de forage, comprenant :
un dispositif de support (3) destiné à supporter une pièce métallique allongée à usiner par enlèvement de matière,
une première unité de fraisage (5) mobile selon au moins un degré de liberté de mouvement par rapport à une pièce (2) supportée au moyen du dispositif de support (3),
une deuxième unité de fraisage (6) mobile selon au moins un degré de liberté de mouvement par rapport à une pièce (2) supportée au moyen du dispositif de support (3),
**caractérisé par** un dispositif de commande (8) configuré pour commander des mouvements de la première unité de fraisage (5), selon ledit au moins un degré de liberté de mouvement, jusque dans ou à l'intérieur d'une première zone d'usinage (B1) de la pièce (2) attribuée à la première unité de fraisage (5), et
pour commander des mouvements de la deuxième unité de fraisage (6), selon ledit au moins un degré de liberté de mouvement, jusque dans ou à l'intérieur d'une deuxième zone d'usinage (B2) de la pièce (2) attribuée à la deuxième unité de fraisage (6),
dans lequel les unités de fraisage (5, 6) comprennent chacune une structure porteuse (7, 11) mobile le long d'un axe d'usinage ou d'un axe de machine, laquelle est configurée pour supporter de manière pivotante l'unité de fraisage respective (5, 6) selon au moins un degré de liberté de mouvement de pivotement, et
dans lequel la structure porteuse respective (7, 11) comprend en outre un ou plusieurs éléments de support (7.1, 11.1) configurés pour supporter une pièce (2) à usiner.

2. Centre d'usinage selon la revendication 1, dans lequel le dispositif de commande (8) est configuré pour commander les mouvements de la première unité de fraisage (5) selon ledit au moins un degré de liberté de mouvement en fonction des mouvements de la deuxième unité de fraisage (6) selon ledit au moins un degré de liberté de mouvement ou indépendamment de ceux-ci, ou inversement.

3. Centre d'usinage selon la revendication 1 ou 2, dans lequel le dispositif de commande (8) est configuré pour attribuer la première zone d'usinage (B1) de la pièce (2) à la première unité de fraisage (5) et la deuxième zone d'usinage (B2) de la pièce (2) à la deuxième unité de fraisage (6).

4. Centre d'usinage selon l'une quelconque des revendications précédentes, dans lequel chaque zone d'usinage (B1, B2) comprend un trajet d'usinage défini par un point de départ et un point d'arrivée, dans lequel le point de départ ou le point d'arrivée respectif se situe dans une zone de bord par rapport à l'axe longitudinal de la pièce (2) ou à l'intérieur de la pièce (2).

5. Centre d'usinage selon l'une quelconque des revendications précédentes, dans lequel la première et la deuxième zone d'usinage (B1, B2) se chevauchent au moins par sections ou ne se chevauchent pas.

6. Centre d'usinage selon l'une quelconque des revendications précédentes, dans lequel le dispositif de commande (8) est configuré pour modifier la première et/ou la deuxième zone d'usinage (B1, B2).

7. Centre d'usinage selon l'une quelconque des revendications précédentes, dans lequel le dispositif de commande (8) est configuré pour modifier l'attribution de la première unité de fraisage (5) à la première zone d'usinage (B1), de telle sorte que la première unité de fraisage (5) puisse également être attribuée ou soit également attribuée, au moins par sections, à la deuxième zone d'usinage (B2), et/ou le dispositif de commande (8) est configuré pour modifier l'attribution de la deuxième unité de fraisage (6) à la deuxième zone d'usinage (B2), de telle sorte que la deuxième unité de fraisage (6) puisse également être attribuée ou soit également attribuée, au moins par sections, à la première zone d'usinage (B1).

8. Centre d'usinage selon l'une quelconque des revendications précédentes, comprenant un dispositif de surveillance (9) destiné à surveiller le fonctionnement de la première et/ou de la deuxième unité de fraisage et à générer une information de surveillance correspondante.

9. Centre d'usinage selon la revendication 7 ou 8, dans lequel le dispositif de commande (8) est configuré pour modifier une zone d'usinage respective (B1, B2) et/ou l'attribution sur la base de l'information de surveillance.

10. Centre d'usinage selon l'une quelconque des revendications précédentes, dans lequel la première unité de fraisage (5) et la deuxième unité de fraisage (6) sont supportées de manière mobile et guidée au moyen d'un dispositif de guidage commun ou de dispositifs de guidage différents (10).

11. Centre d'usinage selon l'une quelconque des revendications précédentes, dans lequel le dispositif de support (3) est configuré pour supporter de manière rotative, autour de son axe longitudinal, une pièce (2) à usiner par enlèvement de matière au moyen du centre d'usinage (1).

12. Centre d'usinage selon l'une quelconque des revendications précédentes, comprenant un dispositif d'étayage (12) destiné à étayer une pièce (2) à usiner par enlèvement de matière au moyen du centre d'usinage (1) en un ou plusieurs points d'étayage le long de l'axe longitudinal.

13. Centre d'usinage selon la revendication 12, dans lequel la première et/ou la deuxième unité de fraisage sont supportées selon un degré de liberté de mouvement en translation et/ou en rotation par rapport à la pièce (2) étayée au moyen du dispositif d'étayage (12).

14. Procédé d'usinage par enlèvement de matière d'une pièce métallique allongée (2), en particulier destiné à la fabrication d'un élément d'entraînement, en particulier pour un train de tiges de forage, dans lequel le procédé est mis en œuvre avec un centre d'usinage (1) selon l'une quelconque des revendications précédentes et comprend les étapes suivantes :
- support d'une pièce métallique allongée (2) à usiner par enlèvement de matière au moyen du centre d'usinage (1),
- déplacement d'une première unité de fraisage (5) selon au moins un degré de liberté de mouvement par rapport à la pièce supportée (2), dans lequel la pièce (2) est usinée par enlèvement de matière au moyen de la première unité de fraisage (5) au moins dans une première zone d'usinage (B1) attribuée à la première unité de fraisage (5),
- déplacement d'une deuxième unité de fraisage (6) selon au moins un degré de liberté de mouvement par rapport à la pièce supportée (2), dans lequel la pièce (2) est usinée par enlèvement de matière au moyen de la deuxième unité de fraisage (6) au moins dans une deuxième zone d'usinage (B2) attribuée à la deuxième unité de fraisage (6),
- commande de mouvements de la première unité de fraisage (5), selon ledit au moins un degré de liberté de mouvement, jusque dans ou à l'intérieur de la première zone d'usinage (B1) de la pièce (2) attribuée à la première unité de fraisage (5), et
- commande de mouvements de la deuxième unité de fraisage (6), selon ledit au moins un degré de liberté de mouvement, jusque dans ou à l'intérieur de la deuxième zone d'usinage (B2) de la pièce (2) attribuée à la deuxième unité de fraisage (6).
